(19) Europäisches Patentamt
European Patent Office
Office européen des brevets

(11) **EP 1 476 727 B1**

(12) **EUROPEAN PATENT SPECIFICATION**

(45) Date of publication and mention
of the grant of the patent:
**14.03.2012 Bulletin 2012/11**

(51) Int Cl.:
*G01F 1/74* *(2006.01)*     *G01F 1/708* *(2006.01)*
*G01F 1/712* *(2006.01)*     *G01F 1/66* *(2006.01)*

(21) Application number: **03732047.0**

(22) Date of filing: **23.01.2003**

(86) International application number:
**PCT/US2003/001925**

(87) International publication number:
**WO 2003/062759 (31.07.2003 Gazette 2003/31)**

(54) **APPARATUS AND METHOD FOR MEASURING PARAMETERS OF A MIXTURE HAVING SOLID PARTICLES SUSPENDED IN A FLUID FLOWING IN A PIPE**

VORRICHTUNG UND VERFAHREN ZUR MESSUNG VON PARAMETERN EINER MISCHUNG MIT FESTPARTIKELN, DIE IN EINEM FLUID SUSPENDIERT SIND, DAS IN EINEM ROHR FLIESST

APPAREIL ET PROCEDE DE MESURE DES PARAMETRES D'UN MELANGE CONTENANT DES PARTICULES SOLIDES SUSPENDUES DANS UN FLUIDE CIRCULANT DANS UN TUYAU

(84) Designated Contracting States:
**AT BE BG CH CY CZ DE DK EE ES FI FR GB GR HU IE IT LI LU MC NL PT SE SI SK TR**

(30) Priority: **23.01.2002  US 351232 P**
**26.02.2002  US 359785 P**
**24.04.2002  US 375847 P**
**12.11.2002  US 425436 P**
**15.11.2002  US 426724 P**

(43) Date of publication of application:
**17.11.2004  Bulletin 2004/47**

(73) Proprietor: **Cidra Corporate Services, Inc.**
**Wallingford, CT 06492 (US)**

(72) Inventors:
• **GYSLING, Daniel, L.**
**Glastonbury, CT 06033 (US)**
• **LOOSE, Douglas, H.**
**Southington, CT 06489 (US)**

(74) Representative: **Hirsch, Peter et al**
**Klunker Schmitt-Nilson Hirsch**
**Patentanwälte**
**Destouchesstrasse 68**
**80796 München (DE)**

(56) References cited:
**WO-A-00/00793     WO-A-01/02810**
**WO-A-93/14382**

**Description**

**Cross-Reference To Related Patent Applications**

This application claims the benefit of U.S. Provisional Application No. 60/351,232 (Cidra Docket No. CC- 0410), filed January 23, 2002; U.S. Provisional Application No. 60/359,785 (Cidra Docket No. CC-0403), filed February 26,2002; U.S. Provisional Application No. 60/375,847 (Cidra Docket No. CC-0468), filed April 24, 2002; U.S. Provisional Application No. 60/425,436 (Cidra Docket No. CC-0538), filed November 12, 2002; and U.S. Provisional Application No. 60/426,724 (Cidra Docket No. CC-0554), filed November 15, 2002, all of which are incorporated herein by reference in their entirety.

**Technical Field**

This invention relates to an apparatus for measuring the flow passing within a pipe, and more particularly to an apparatus and method for measuring the speed of sound and/or vortical disturbances propagating in the flow, having particles suspended within a continuous fluid, to determine parameters, such as particle/fluid ratio, particle size and volumetric flow rate of the flow in pipes using acoustic and/or dynamic pressures.

**Background Art**

This invention provides a method to measure parameters of a fluid/particle mixture in a pipe that can be used in many applications, such as in chemical, pharmaceutical, petroleum and power generation industries. In particular, the invention provides a method to measure pulverized coal and air mixtures used in pulverized fuel delivery systems in place in a large percentage of coal fired boilers used in the power generation industry.

Currently, well over 50% of the electricity in the US is generated with coal. While coal is considered a cost effective, abundant resource in the US, the use of coal has been restricted due in large part to environmental concerns. To mitigate this impact, the US Department of Energy and the Power Generation industry have large programs designed to develop technology to reduce the environment effects of burning coal. These Clean Coal Initiatives include technology designed to develop improvements in the combustion process to improve efficiency while reducing pollutants such as unburned carbon, ash, and nitrous oxide (NOx).

The ability to measure the flow rate and composition of the air /coal mixture within the coal pipes is an important aspect of any system or strategy designed to optimize the performance of the PF delivery system. The industry recognizes this and therefore has been developing a wide variety of technologies to perform this measurement. These include probe based and sampling devices, as well as real time meters based on a wide variety of technologies including electrostatic charges, microwaves, and ultrasonic.

**Summary of the Invention**

Objects of the present invention include providing a system for measuring the speed of sound propagating through a particle/fluid mixture in pipes in coal fired boiler systems and related processes, for example, to determine particular parameters of the mixture.

According to the present invention, an apparatus for measuring at least one parameter of a particle/fluid mixture in a pipe includes a spatial array of at least two pressure sensors, disposed at different axial locations along the pipe. Each of the pressure sensors measures an unsteady pressure within the pipe at a corresponding axial location. Each of said sensors provides a pressure signal indicative of the unsteady pressure within the pipe at said axial location of a corresponding one of said sensors. A signal processor, responsive to said pressure signals, provides a signal indicative of the at least one parameter of the mixture in the pipe.

According to the present invention, a method for measuring at least one parameter of a particle/fluid mixture in a pipe includes measuring unsteady pressures within the pipe at at least two predetermined axial measurement locations along the pipe to provide a pressure signal indicative of the unsteady pressure within the pipe at each of the at least two predetermined axial measurement locations. Further the method includes calculating the at least one parameter of the particle/fluid mixture in the pipe using the unsteady pressure measured at the axial measurement locations.

The foregoing and other objects, features and advantages of the present invention will become more apparent in light of the following detailed description of exemplary embodiments thereof.

**Brief Description of the Drawings**

Fig. 1 is a block diagram of a flow meter for measuring the speed of sound of the fluid/particle mixture flowing with a pipe, in accordance with the present invention.

Fig. 2 is a schematic diagram of a pulverized fuel (PF)/air mixture parameter measurement system within a coal fired boiler system, in accordance with the present invention.

Fig. 3 is a magnified photograph showing particle size of coal typical of the system shown in Fig. 2.

Fig. 4 is a plot of the speed of sound of a mixture versus the frequency in air/coal mass flow ratio, in accordance with the present invention.

Fig. 5 is a plot of actual data and a model of the speed of sound as a function of frequency for air/coal mixtures, in accordance with the present invention.

Fig. 6 is a plot showing the standard deviation of sound speed versus frequency for various arrays of a PF/air mixture parameter measurement system, in accordance with the present invention.

Fig. 7 is a plot of sound speed as a function of frequency for air/coal mixtures with fixed particle size (50 mm) and varying air-to-fuel mass Ratio in accordance with the present invention.

Fig. 8 is a plot of sound speed as a function of frequency for air/coal mixtures with varying particle size where the air-to-fuel mass ratio is equal to 1.8 in accordance with the present invention.

Fig. 9 is a plot of sound speed as function of air/coal ratio in accordance with the present invention.

Fig. 10 is a flow diagram of an optimization procedure employed to determine air-to-fuel ratio and particle size from analytical model and experimentally determined dispersive speed of sound data in accordance with the present invention.

Fig. 11 is a plot of the results of the optimization procedure of Fig. 10 applied to data recorded from an array of sensors listening to flow in a six inch circular duct, 50 $\mu$m particle size, 30,5 m/s (100 ft/sec) air flow rate with an air-to-fuel ratio of 1.8.

Fig. 12 is a plot of the results of the optimization procedure of Fig. 10 applied to a series of data sets with varying air-to-fuel ratio.

Fig. 13 is a kw plot of data processed from an array of pressure sensors use to measure the speed of sound of a coal/air mixture flowing in a pipe, in accordance with the present invention.

Fig. 14 is a block diagram of a flow meter for measuring the vortical field of the fluid/particle mixture flowing with a pipe, in accordance with the present invention.

Fig. 15 is a cross-sectional view of a pipe showing a turbulent pipe flow velocity profile.

Fig. 16 is a side elevational view of another embodiment of a flow meter for measuring the vortical disturbances in a pipe, in accordance with the present invention.

Fig. 17 is a plot of the pressure signals measured by a pair of pressure sensors of the flow meter of Fig. 16.

Fig. 18 is a plot of the cross-correlation of the pressure signals plotted in Fig. 17.

Fig. 19 is a kw plot of data processed from a flow meter embodying the present invention that illustrates slope of the convective ridge, and a plot of the optimaztion function of the convective ridge, in accordance with the present invention.

Fig. 20 is a side elevational view of a plurality of pressure sensors, having PVDF, clamped to the outer surface of the pipe, in accordance with the present invention.

Fig. 21 is a partial perspective view of one of the pressure sensors of Fig. 20.

1ft = 0,305 m


**Best Mode for Carrying Out the Invention**

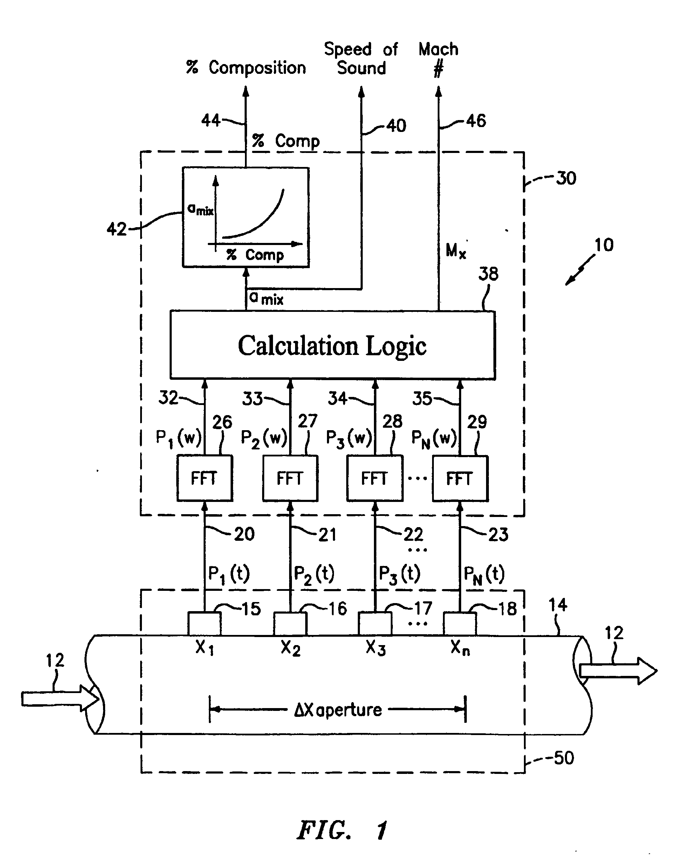

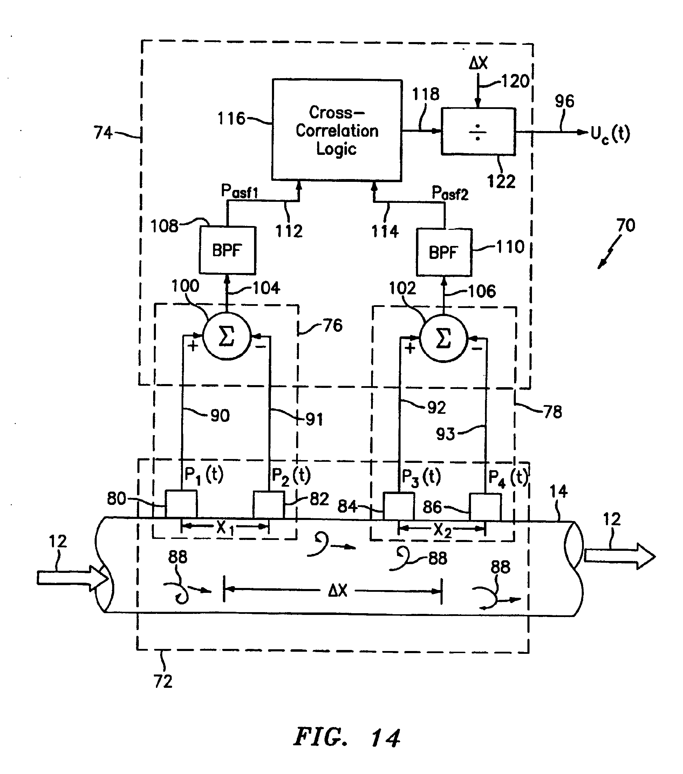

Referring to Figs. 1 and 14, a flow meter 10,70 embodying the present invention is provided that measures a number of parameters/characteristics of a mixture 12 of solid particles suspended within a continuous fluid flowing within a pipe or conduit 14, wherein a fluid is defined as a liquid and/or a gas. The flow meter may be configured and programmed to measure the speed of sound propagating through the mixture or measure the vortical disturbances propagating through the mixture. In some instances, the flow meter 10 may be configured to measure both the speed of sound and the vortical disturbances. Depending on the configuration or embodiment, the flow meter can measure at least one of the following parameters of the mixture flow 12: the fluid/particle concentration (volumetric phase fraction), the volumetric flow rate, the size of the solid particles, the mass flow of the mixture and the velocity of the mixture. To determine any one of these parameters, the flow meter 10,70 measures the unsteady pressures created by the speed of sound (SOS) and/or the vortical disturbances propagating through the mixture flowing in the pipe 14, which will be described in greater detail hereinafter.

The solid particles of the mixture 12 may be of any size, shape and material. For example, the particles may be small in size as in the form of a powder, in a granular form, or greater in size. The flow meter 10,70 can be used in any application that carries solid particles suspended in a fluid through a pipe, such as in chemical, pharmaceutical, petroleum and power generation applications. For example, the present invention is well suited to measure the parameters (e.g. air/coal ratio, particle size) for power generation systems that use pulverized coal to fire the furnace a steam boiler system.

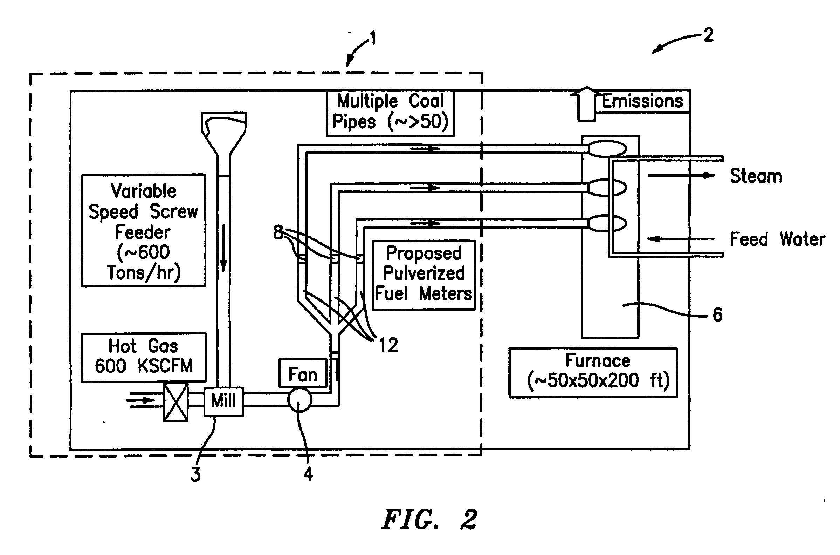

As one example, the present invention will be discussed in the context of a Pulverized Fuel (PF) delivery system for power generation, but one will appreciate that the flow meter can be applied to any number of other applications, as discussed hereinbefore. A representative PF delivery system 1 is shown in a coal fired boiler system 2 in Fig. 2. The coal is pulverized in a mill 3 and entrained in air produced by many means, such as a fan 4 to transport the PF/air mixture via pipes 12 for delivery to the furnace 6. Typical furnaces can have >50 coal pipes, each 30,5-50,8 m (12.20 inch) in diameter. Typically, a large utility boiler >300 Mw, can have 4-11 pulverizing mills feeding the furnace. The ability of the PF delivery system to deliver the proper amount of fuel and air to the furnace through these multiple coal pipes, both collectively and individually, has a strong influence on the performance and emissions from the coal fired boiler.

As is known, non-uniformities in the PF delivery system 1 can result in variation of the fuel to air ratios, causing hot spots, regions of high NOx generation, and unburned fuel. The connection between performance of a PF fuel delivery system 1 and a boiler system 2 is well recognized. The flow meter 10 embodying the present invention is capable of measuring the fuel to air ratio and particle size of the pulverized coal provided to the furnace to thereby provide feedback to the operator to provide more efficient combustion of the coal.

As described hereinbefore, the flow meter 10,70 of the present invention may be configured and programmed to measure and process the detected unsteady pressures $P_1(t)$ - $P_N(t)$ created by acoustic waves and/or vortical disturbances propagating through the mixture to determine parameters of the mixture flow 12. One such flow meter 10 is shown in Fig. 1 that measures the speed of sound (SOS) of one-dimensional sound waves propagating through the fluid/particle mixture to determine the composition the mixture, namely the liquid/particle ratio of the mixture. The flow meter is also capable of determining the average size of the particles, velocity of the mixture, and the volumetric flow rate of the mixture. It is known that sound propagates through various mediums at various speeds in such fields as SONAR and RADAR fields. The speed of sound of a mixture within a pipe 14 may be determined using a number of known techniques, such as those set forth in U.S. Patent Application Serial No. 09/344,094, entitled "Fluid Parameter Measurement in Pipes Using Acoustic Pressures", filed June 25, 1999, and U.S. Patent Application Serial No. 10/007,749, entitled "Fluid Parameter Measurement in Pipes Using Acoustic Pressures", filed November 7, 2001, each of which are incorporated herein by reference. The present invention utilizes at least one flow meter 10 to determine various parameters of the liquid/particle mixture, wherein one of the parameters is the speed at which sound travels within the mixture pipe system as will be more fully described herein below.

In accordance with the present invention, the speed of sound propagating through the mixture 12 is measured by passively listening to the flow with an array of unsteady pressure sensors to determine the speed at which one-dimensional compression waves propagate through a liquid/particle mixture contained within the pipe 14.

As shown in Fig. 1, the flow meter 10 has an array of at least three acoustic pressure sensors 15,16,17, located at three locations $x_1,x_2,x_3$ axially along the pipe 14. One will appreciate that the sensor array may include more than three pressure sensors as depicted by pressure sensor 18 at location $x_N$. The pressure generated by the acoustic waves may be measured through holes in the pipe 14 ported to external pressure sensors 15 - 18 or by other techniques discussed hereinafter. The pressure sensors 15-18 provide pressure time-varying signals $P_1(t),P_2(t),P_3(t),P_N(t)$ on lines 20,21,22,23 to a signal processing unit 30 to known Fast Fourier Transform (FFT) logics 26,27,28, 29, respectively. The FFT logics 26 - 29 calculate the Fourier transform of the time-based input signals $P_1(t)$ - $P_N(t)$ and provide complex frequency domain (or frequency based) signals $P_1(w),P_2(w),P_3(w),P_N(w)$ on lines 32,33,34,35 indicative of the frequency content of the input signals. Instead of FFT's, any other technique for obtaining the frequency domain characteristics of the signals $P_1(t)$ - $P_N(t)$, may be used. For example, the cross-spectral density and the power spectral density may be used to form a frequency domain transfer functions (or frequency response or ratios) discussed hereinafter.

The frequency signals $P_1(w)$ - $P_N(w)$ are fed to $a_{mix}$-Mx Calculation Logic 38 which provides a signal to line 40 indicative of the speed of sound of the mixture $a_{mix}$ (discussed more hereinafter). The $a_{mix}$ signal is provided to map (or equation) logic 42, which converts $a_{mix}$ to a percent composition of the PF/air mixture and provides a %Comp signal to line 44 indicative thereof (as discussed hereinafter). Also, if the Mach number Mx is not negligible and is desired, the calculation logic 40 may also provide a signal Mx to line 46 indicative of the Mach number Mx.

More specifically, for planar one-dimensional acoustic waves in a homogenous mixture, it is known that the acoustic pressure field P(x,t) at a location x along a pipe, where the wavelength $\lambda$ of the acoustic waves to be measured is long compared to the diameter d of the pipe 12 (i.e., $\lambda/d \gg 1$), may be expressed as a superposition of a right traveling wave and a left traveling wave, as follows:

$$P(x,t) = \left( Ae^{-ik_r x} + Be^{+ik_l x} \right) e^{i\omega t} \qquad \text{Eq. 1}$$

where A,B are the frequency-based complex amplitudes of the right and left traveling waves, respectively, x is the pressure measurement location along a pipe, ω is frequency (in rad/sec, where ω=2πf), and $k_r,k_l$ are wave numbers for the right and left travelling waves, respectively, which are defined as:

$$k_r \equiv \left(\frac{\omega}{a_{mix}}\right)\frac{1}{1+M_x} \quad \text{and} \quad k_l \equiv \left(\frac{\omega}{a_{mix}}\right)\frac{1}{1-M_x} \qquad \text{Eq. 2}$$

where $a_{mix}$ is the speed of sound of the mixture in the pipe, ω is frequency (in rad/sec), and $M_x$ is the axial Mach number of the flow of the mixture within the pipe, where:

$$M_x \equiv \frac{V_{mix}}{a_{mix}} \qquad \text{Eq. 3}$$

where Vmix is the axial velocity of the mixture. For non-homogenous mixtures, the axial Mach number represents the average velocity of the mixture and the low frequency acoustic field description remains substantially unaltered.

The data from the array of sensors may be processed in any domain, including the frequency/spatial domain, the temporal/spatial domain, the temporal/wave-number domain or the wave-number/frequency (k-ω) domain. As such, any known array processing technique in any of these or other related domains may be used if desired.

Also, some or all of the functions within the signal processing unit 30 may be implemented in software (using a microprocessor or computer) and/or firmware, or may be implemented using analog and/or digital hardware, having sufficient memory, interfaces, and capacity to perform the functions described herein.

Acoustic pressure sensors 15-18 sense acoustic pressure signals that, as measured, are lower frequency (and longer wavelength) signals than those used for ultrasonic flow meters of the prior art, and thus the current invention is more tolerant to inhomogeneities in the flow, such as roping and other time and space domain inhomogeneities within the flow, even where entrenchment or coal "roping" is unlikely such as following a bend. The term "roping" is a term known to those skilled in this art which represents a form of severe spatial and temporal mal-distribution induced in mixture flows of widely different component densities. It is a condition where a large portion of the coal flow is in a band running along one side of pipe 14.

In addition, the present invention incorporates the compliance of the pipe 14 to determine the effective speed of sound of the pipe/PF/air mixture system. The acoustic pressure signals $P_1(t)$ - $P_N(t)$ are generated within the PF/air mixture of the pipe 14 by a variety of non-discrete sources such as remote machinery, mills, fans 4 (Fig. 2), valves, elbows, as well as the PF/air mixture flow itself. It is this last source, the PF/air mixture 12 flowing within the pipe 14, which is a generic source of acoustic noise that assures a minimum level of acoustics for any PF/air mixture piping systems for which the present invention takes unique advantage. The flow generated acoustics increase with mean flow velocity and the overall noise levels (acoustic pressure levels) are a function of the generating mechanism and the damping mechanism. As such, no external discrete noise source is required within the present invention and thus may operate using passive listening. While the flow meter 10 passively listens to the mixture flow 12, the present invention contemplates adding an acoustic source to inject a desire acoustic wave into the flow to be measured, such as by compressing, vibrating and/or tapping the pipe, to name a few examples.

For certain types of pressure sensors, e.g., pipe strain sensors, accelerometers, velocity sensors or displacement sensors, discussed hereinafter, it may be desirable for the pipe 14 to exhibit a certain amount of pipe compliance.

Alternatively, to minimize any error effects (and the need for the corresponding calibration) caused by pipe compliance, the axial test section 50 of the pipe 14 along where the sensors 15 - 18 are located may be made as rigid as possible. To achieve the desired rigidity, the thickness of the wall of the test section 50 may be made to have a predetermined thickness, or the test section 50 may be made of a very rigid material, e.g., steel, titanium, Kevlar®, ceramic, or other material with a high modulus.

It is within the scope of the present that the pressure sensor spacing may be known or arbitrary and that as few as two sensors are required if certain information is known about the acoustic properties of the PF/air mixture piping system. The pressure sensors are spaced sufficiently such that the entire length of the array (aperature) is at least a significant fraction of the measured wavelength of the acoustic waves being measured. As will be described in greater detail, the acoustic wavelength to be measured is a function of at least the size and mass of the particles, and the viscosity of the fluid. The greater the size and mass of the particles and/or the less viscous the fluid, the greater the spacing of the sensors is needed. Conversely, the smaller the size and mass of the particles and/or the more viscous the fluid, the shorter the spacing of the sensors is needed.

As discussed, the flow meter 10 measures the speed of sound of one-dimensional sound waves propagating through the fluid/particle mixture to determine the composition of the mixture. Specifically, the speed of sound propagating through dilute solid/air mixtures can be directly related to the mass fraction particles of the flow. A typical PF fuel delivery system 1 may operate with an air to coal mass ratio of 1.5 to 2.5. Typically, PF delivery systems operate with an air-to-coal mass ratio of 1.5 to 2.5 with coal density of 1200 to 1400 kg/m$^3$ compared to 1.2 kg/m$^3$ for air at standard atmospheric conditions. Thus, meeting the desired mass ratio results in a very dilute mixture of coal on a volumetric basis, on the order of one part in 1000 by volume.

Assuming that the particles of coal are small enough and the acoustic frequencies and the frequencies of perturbations associated with the acoustics are low enough for the solid particles to exhibit negligible slip (both steady and unsteady), the sound speed can be assumed to be non-dispersive (that is constant with frequency) and the volumetric phase fraction of the mixture could be determined through the Wood equation:

$$\rho_{mix} = \sum_{i=1}^{N} \phi_i \rho_i$$

$$\frac{1}{\rho_{mix} a_{mix}^2} = \sum_{i=1}^{N} \frac{\phi_i}{\rho_i a_i^2}$$

$$\sum_{i=1}^{N} \phi_i = 1$$

Including the effect of the compliance introduced by the conduit 12 (in this case a circular pipe of modulus E, radius R and wall thickness t)

$$\frac{1}{\rho_{mix} a_{measured}^2} = \frac{1}{\rho_{mix} a_{mix}^2} + \sigma \quad \text{where} \quad \sigma \equiv \frac{2R}{Et}$$

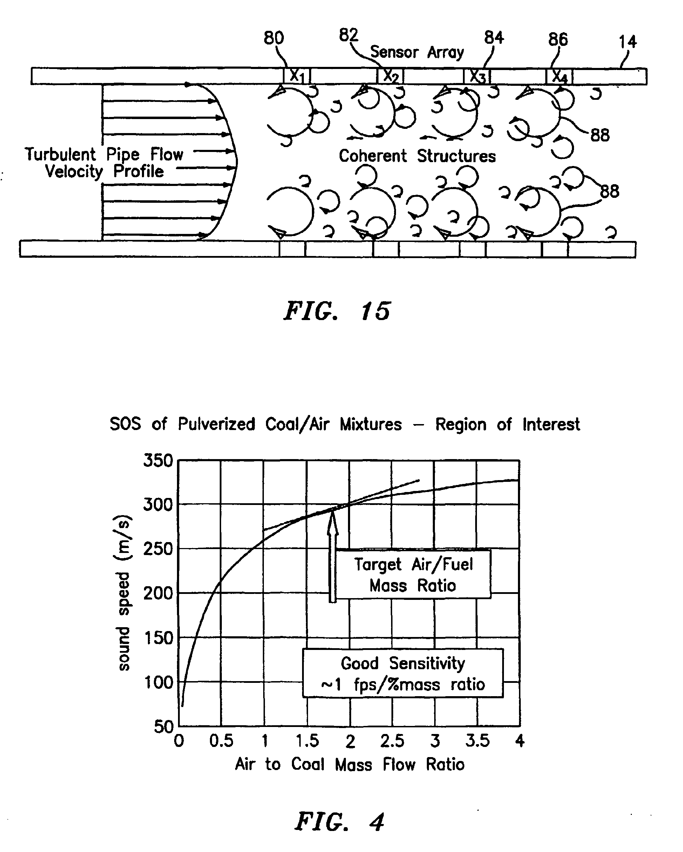

Utilizing the relations above, the speed at which sound travels within the piping system of a representative coal / air mixtures is shown in Fig. 4 as a function of air /coal mass ratio. For this example, the pure air was assumed to have a density of 1.2 kg/m^3 and a sound speed of 365.9 m/s and the coal was assumed to have a density of 1400 kg/m^3 and a sound speed of 2439 m/s. As shown, the effect of increasing coal fraction, i.e. decreasing air/coal ratio is to decrease the sound speed. Physically, adding coal particles effectively mass loads the mixture, while not appreciably changing the compressibility of the air. Over the parameter range of interest, the relation between mixture sound speed and air / coal ratio is well behaved and monatomic.

While the calibration curves based on predictions from first principles are encouraging, using empirical data mapping from sound speed to air/coal ratio may result in improved accuracy of the present invention to measure the air/ coal fractions of the mixture.

However, it has been discovered that the physical properties of pulverized coal/air mixtures are generally such that there will be velocity slip at all but very low frequencies (on the order of <1-2 Hz for nominally 50 µm coal particles in air).

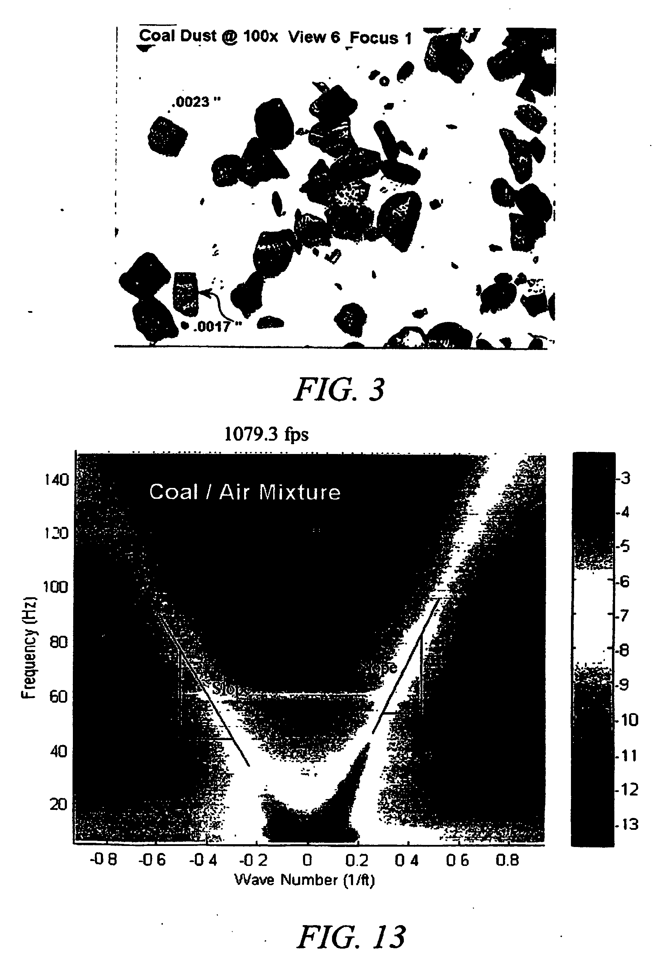

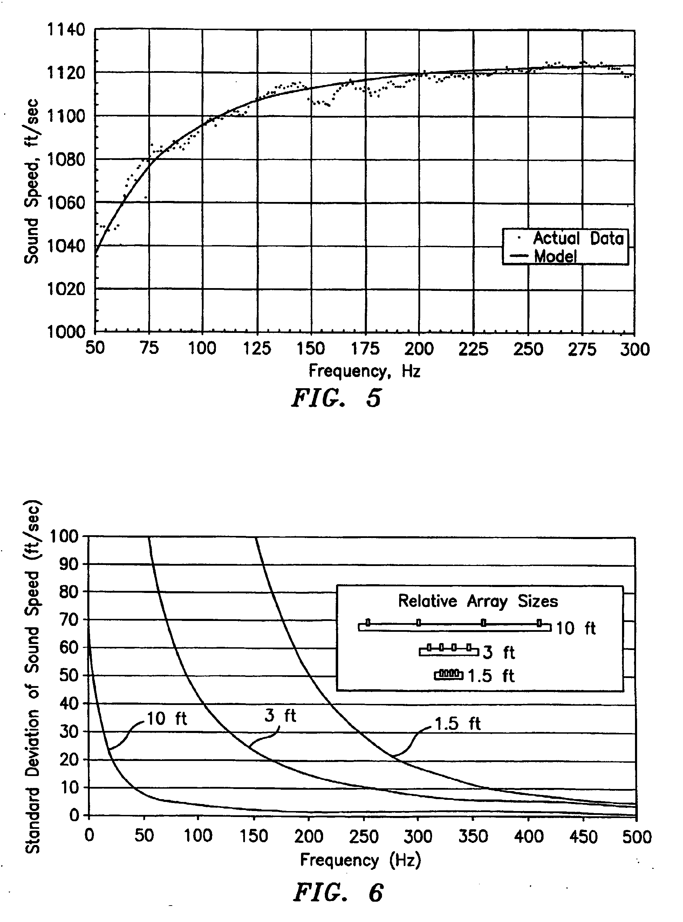

Fig. 5 shows the measured speed of sound as a function of frequency for an actual coal/air mixture 12. The sound speed was measured utilizing passive listening techniques of the present invention as described herein. The frequency dependence of the sound speed was determined by applying a Capon array-processing algorithm at multiple narrow frequency ranges between 50-300 Hz thereby determining a frequency specific acoustic propagation velocity. In this particular example, the data was obtained wherein the coal/air mixture was flowing at nominally 30,5 m/s (100 ft/sec) with an air-to-coal mass ratio equal to 1.8. The coal particles were nominally 50 µm in size, representative of pulverized coal typically used in power generation and other industrial applications. A magnified view of the coal particles that were used for this test is shown in Fig. 3.

Further shown in Fig. 5, the sound speed increases with increasing frequency and asymptotes toward a constant value. The sound speed asymptote at higher frequency is essentially the sound speed of air only with no influence of the suspended particles. Also, it is apparent that the sound speed of the coal/air mixture has not reached the quasi-steady limit at the lowest frequency for which sound speed was measured. The sound speed is continuing to decrease at the lower frequency limit. An important discovery of the present invention is that the speed at which sound propagates through dilute particles suspended in a continuous fluid is said to be dispersive. As defined herein, the speed at which acoustic waves propagate through dispersive mixtures varies with frequency.

Measuring the sound speed of a mixture 12 at progressively lower and lower frequencies becomes inherently less accurate as the total length of the array of pressure sensors 15 - 18 ($\Delta x_{aperature}$), which define the aperature of the array, becomes small compared to the wavelength of the acoustics. In general, the aperture should be at least a significant fraction of a wavelength of the sound speed of interest. In a particular embodiment sound speed data was recorded with an array of four sensors, spaced at 12 inches, for a total aperture of three feet. At 50 Hz, A 305 m/s (1000 ft/sec) sound wave has a wavelength of 6,10 m (20 ft). Thus, the aperture of this particular array (approx. 92 cm (0,36 inches) spanned only 3/20ths of a wavelength, and the array's ability to accurately resolve sound speeds below this was clearly impaired. It is an important aspect of the present invention that the ability to resolve sound speed at low frequencies is directly related to aperture of the array. Consequently longer arrays are used to resolve sound speeds at lower frequencies. As shown in Fig. 6, the standard deviation associated with determining the speed of sound in air is shown as a function of frequency for three arrays of varying aperture, namely 0,46 m; 0,91 m; 3,05 m (1.5 ft, 3 ft and 10 ft).

Given the practical constraints in accurately measuring sound speeds at ultra-low frequencies, the data suggests that utilizing a quasi-steady model to interpret the relationship between sound speed, measured at frequencies above those at which the quasi-steady model is applicable, and the air-to-fuel ratio would be problematic, and may, in fact, be impractical. Thus, the key to understanding and interpreting the composition of coal/air mixtures through sound speed measurements lies in the dispersive characteristics of the coal/air mixture.

In accordance with the present invention the dispersive nature of the system utilizes a first principles model of the interaction between the air and particles. This model is viewed as being representative of a class of models that seek to account for dispersive effects Other models could be used to account for dispersive effects without altering the intent of this disclosure (for example, see the paper titled "Viscous Attenuation of Acoustic Waves in Suspensions" by R.L. Gibson, Jr. and M.N. Toksöz), which is incorporated herein by reference. The model allows for slip between the local velocity of the continuous fluid phase and that of the particles. The drag force on the particles by the continuous fluid is modeled by a force proportional to the difference between the local fluid velocity and that of the fluid particles and is balanced by inertial force:

$$F_{drag} = K(U_f - U_p) = \rho_p v_p \frac{\partial U_p}{\partial t}$$

where K = proportionality constant, $U_f$= fluid velocity, $U_p$ = particle velocity, $\rho_p$ = particle density and $v_p$ = particle volume. The effect of the force on the continuous fluid phase by the fluid particles is modeled as a force term in the axial momentum equation. The axial momentum equation for a control volume of area A and length $\Delta x$ is given by:

$$P_x - P_{x+\Delta x} - K(U_f - U_p)\left\{\frac{\phi_p \Delta x}{v_p}\right\} = \frac{\partial}{\partial t}(\rho_f U_f \Delta x)$$

where P = pressure at locations x and $\Delta x$, $\phi_p$ = volume fraction of the particles, $\rho_f$= fluid density.
The particle drag force is given by:

$$F_{drag} = K(U_f - U_p) = C_d A_p \frac{1}{2}\rho_f \left(U_f - U_p\right)^2$$

where $C_d$ = drag coefficient, $A_p$ = frontal area of particle and $\rho_f$ = fluid density.
Using Stokes law for drag on a sphere at low Reynold's number gives the drag coefficient as:

$$C_d = \frac{24}{\text{Re}} = \frac{24\mu}{\rho_f \left( U_f - U_p \right) D_p}$$

where $D_p$ = particle diameter and $\mu$ = fluid viscosity.
Solving for K in this model yields:

$$K = 3\pi\mu D_p$$

Using the above relations and 1-dimensional acoustic modeling techniques, the following relation can be derived for the dispersive behavior of an idealized fluid particle mixture.

$$a_{mix}(\omega) = a_f \sqrt{\frac{1}{1 + \frac{\varphi_p \rho_p}{\rho_f \left( 1 + \omega^2 \frac{\rho_p^2 v_p^2}{K^2} \right)}}}$$

In the above relation, the fluid SOS, density ($\rho$) and viscosity ($\phi$) are those of the pure phase fluid, $v_p$ is the volume of individual particles and $\phi_p$ is the volumetric phase fraction of the particles in the mixture.

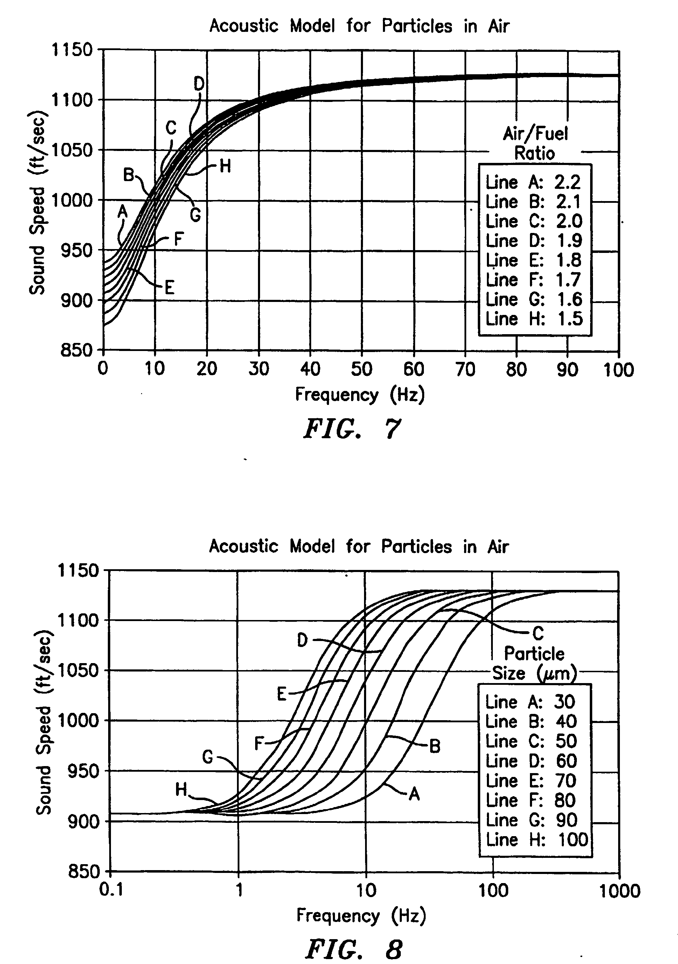

Two parameters of primary interest in pulverized coal measurements are particle size and air-to-fuel mass ratio. To this end, it is of interest to examine the dispersive characteristics of the mixture as a function of these two variables. Figs. 7 and 8 show the dispersive behavior for coal/air mixtures with parameters typical of those used in pulverized coal deliver systems.

In particular Fig. 7 shows the predicted behavior for nominally 50 $\mu$m size coal in air for a range of air-to-fuel ratios. As shown, the effect of air-to-fuel ratio is well defined in the low frequency limit. However, the effect of the air-to-fuel ratio becomes indistinguishable at higher frequencies, approaching the sound speed of the pure air at high frequencies (above ~100 Hz).

Similarly, Fig. 8 shows the predicted behavior for a coal/air mixture with an air-to-fuel ratio of 1.8 with varying particle size. This figure illustrates that particle size has no influence on either the low frequency limit (quasi-steady) sound speed, or on the high frequency limit of the sound speed. However, particle size does have a pronounced effect in the transition region.

Figs. 7 and 8 illustrate an important aspect of the present invention. Namely, that the dispersive properties of dilute mixtures of particles suspended in a continuous fluid can be broadly classified into three frequency regimes: low frequency range, high frequency range and a transitional frequency range. Although the effect of particle size and air-to-fuel ratio are inter-related, the predominant effect of air-to-fuel ratio is to determine the low frequency limit of the sound speed to be measured and the predominate effect of particle size is to determine the frequency range of the transitional regions. As particle size increases, the frequency at which the dispersive properties appear decreases. For typical pulverized coal applications, this transitional region begins at fairly low frequencies, ~ 2Hz for 50 $\mu$m size particles.

In the low frequency regime, the particles exhibit negligible slip with the fluid. The frequency range for which the no-slip, quasi-steady approximation is valid is a function of a variety of parameters including particle size, continuous phase viscosity, particle shape and particle density.

The quasi-steady sound speed is given by the low frequency limit of the above relation, where AFR is air/fuel ratio:

$$a_{mix}(\omega \to 0) = a_f * \sqrt{\frac{1}{1 + \dfrac{\varphi_p \rho_p}{\rho_f}}} \cong a_f * \sqrt{\frac{1}{1 + \dfrac{1}{AFR}}}$$

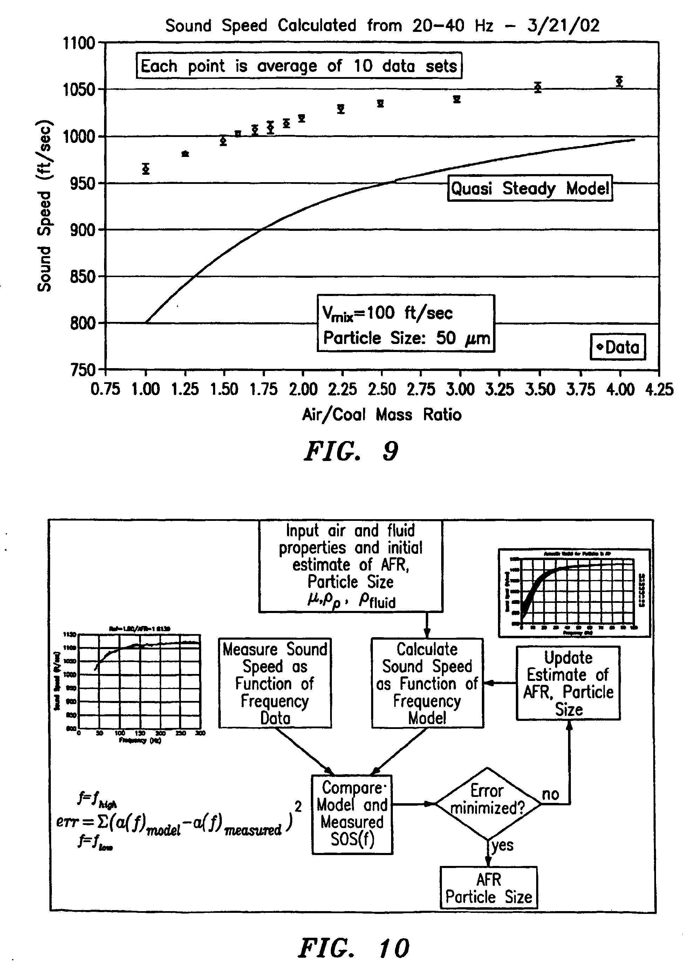

Note that particle size does not affect the low frequency limit of the sound speed. Referring to Fig. 9, the sound speed was measured using an embodiment of the present invention having eight sensors at 20.5 inch spacing, averaged from 20-40 Hz, for a range of air-to-coal mass ratios. The sound speed predicted for the coal/air mixtures using the quasi-steady model are also presented. As shown, although the general trend is captured, i.e. sound speed decreases with increased coal loading, the error is significant, rendering a first principle interpretation, based on a quasi-steady model inadequate.

In the high frequency limit, the dispersion relation predicts the sound speed with asymptote towards the sound speed of the pure fluid.

$$a_{mix}(\omega \Longrightarrow \infty) = a_{fluid}$$

Interestingly, the high frequency limit is independent of both particle size and air-to-fuel ratio.

Given the difficulties measuring sufficiently low frequencies to apply the quasi-steady model and recognizing that the high frequency sound speed contains no direct information on either particle size or air-to-fuel ratio, it becomes apparent that the dispersive characteristics of the coal/air mixture should be utilized to determine particle size and air-to-fuel ratio based on speed of sound measurements.

As described hereinbefore, the flow meter 10 of the present invention includes the ability to accurately determine the average particle size of the coal in the PF/air mixture within the pipe 14 and the air to fuel ratio. Provided there is no appreciable slip between the air and the solid coal particle, the propagation of one dimensional sound wave through multiphase mixtures is influenced by the effective mass and the effective compressibility of the mixture. For an air transport system, the degree to which the no-slip assumption applies is a strong function of particle size and frequency. In the limit of small particles and low frequency, the no-slip assumption is valid. As the size of the particles increases and the frequency of the sound waves increase, the non-slip assumption becomes increasing less valid. For a given average coal particle size, the increase in slip with frequency causes dispersion, or, in other words, the sound speed of the mixture to change with frequency. With appropriate calibration the dispersive characteristic of a mixture will provide a measurement of the average particle size, as well as, the air to fuel ratio (particle/fluid ratio) of the mixture.

Using the model described above, which yields the equation shown below, and experimentally determined sound speed as function of frequency, the present invention includes an optimization procedure to simultaneously determine particles size and AFR in coal / air mixtures:

$$a_{mix}(\omega) = a_f \sqrt{\frac{1}{1 + \dfrac{\varphi_p \rho_p}{\rho_f \left(1 + \omega^2 \dfrac{\rho_p^2 v_p^2}{K^2}\right)}}}$$

Referring to Fig. 10 there is shown an optimization procedure in accordance with the present invention in which the free parameters of an analytical model are optimized to minimize an error function. For illustration purposes, the error function utilized is the sum of the differences of the sound speeds between an analytical model and the experimentally determined sound speed as a function of frequency:

$$err = \sum_{f=f_{low}}^{f=f_{high}} (a(f)_{model} - a(f)_{measured})^2$$

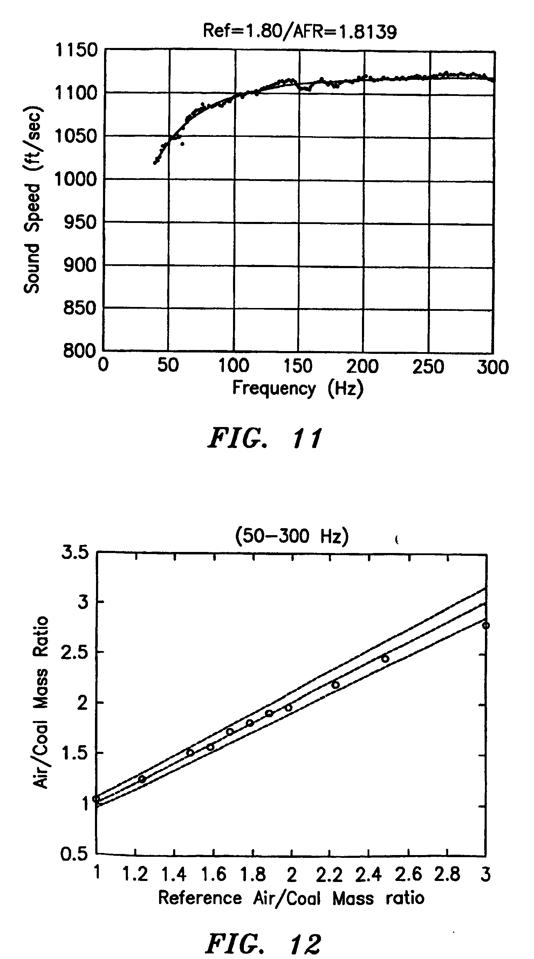

The results of the optimization procedure applied to data recorded from an array of sensors listening to flow in a six inch circular duct, 50 μm particle size, 30,5 m/s (100 ft/sec) air flow rate with an air-to-fuel ratio of 1.8 is shown in Fig. 11. The measured and optimized-model-predicted sound speed is shown. As shown, the model captures the transitional frequency range well and provides a good estimate of the air-to-fuel ratio.

The results of the optimization procedure applied to a series of data sets with varying air-to-fuel ratio is shown in Fig. 12. Note for this optimization the particle size was held constant over the range of data sets.

In addition to measuring the fluid to particle ratio of the mixture 12 and particle size within a pipe 14 using the measured speed of sound, the flow meter 10 further includes the ability to measure of volumetric flow rate of the mixture by comparing the difference of the speed of one dimensional sound waves propagating with and against the mean flow.

This method of determining the volumetric flow rate of the particle/fluid mixture 12 within pipe 14 relies on the interaction of the mean flow with the acoustic pressure field. The interaction results in sound waves propagating with the mean flow traveling at the speed of sound (if the particle/liquid mixture were not flowing) plus the convection velocity and, conversely, sound waves traveling against the mean flow propagating at the speed of sound minus the convection velocity. That is,

$$a_R = a_{mix} + u$$

$$a_L = a_{mix} - u$$

where $a_R$ = velocity of a right traveling acoustic wave relative to a stationary observer (i.e. the pipe 14), $a_L$ = velocity of a left traveling acoustic wave apparent to a stationary observer, $a_{mix}$ = fluid speed of sound (if the fluid were not flowing) and u = the mean flow velocity (assumed to be flowing from left to right in this instance). Combining these two equations yields an equation for the mean velocity,

$$u = \frac{a_R - a_L}{2}$$

Therefore, by measuring the propagation velocity of acoustic waves in both directions relative to the stationary pipe as described hereinbefore, the mean flow velocity can be calculated by multiplying the mean flow velocity by the cross-sectional area of the pipe 14.

The practicality of using this method to determine the mean flow is predicated on the ability to resolve the sound speed in both directions with sufficient accuracy to determine the volumetric flow. For typical liquid measurements, flow velocities are typically at 3,05 m/s ~(10 ft/sec) and sound speeds of ~1219 m/s (4000 ft/sec). Thus axial mach numbers are on the order of 10/4000 of 0.0025. For a +/-10% accuracy in flow rate 3,05 m/s (+/-(1ft/sec), the sound speed of the upstream and downstream propagating waves would need to be resolved to +/-0.5/4000 or 1 part in 8,000.

However, for PF/air mixture flows, axial flow velocities are nominally around 70 ft/sec with no flow sound speeds of 213 m/s~(700 ft/sec). This results in mach numbers of ~0.1, approximately 2 orders of magnitude greater than typical liquid flows. For pulverized fuel flows, to resolve the flow rate to 10% accuracy 2,13 m/s (or+/- (7 ft/sec), one would have to resolve the sound speed to 1,07 m/s+/- (3.5 ft/sec ) or 3.5/700 or I part in 200.

For the sound speed measurement, the flow meter 10 utilizes similar processing algorithms as those employed herein before. The temporal and spatial frequency content of sound propagating within the process piping 14 is related through a dispersion relationship.

$$\omega \simeq \frac{k}{a_{mix}}.$$

The wave number is k, which is defined as $k=2\pi/\lambda$, $\omega$ is the temporal frequency in rad/sec, and $a_{mix}$ is the speed at which sound propagates within the process piping. For this cases where sound propagates in both directions, the acoustic power is located along two acoustic ridges, one for the sound traveling with the flow at a speed of $a_{mix} + V_{mix}$ and one for the sound traveling against the flow at a speed of $a_{mix} - V_{mix}$.

Fig. 13 shows a k-$\omega$ plot generated for acoustic sound field of a coal/air mixture flowing through a pipe. Two acoustic ridges are clearly evident. Each of the slopes of the two depicted acoustic ridges respectively defines the speed of sound traveling with and against the mean flow.

The sonar flow meter 10 of Fig. 1 is configured and programmed to measure and utilize the speed of sound propagating through a particle/fluid mixture 12 flowing in a pipe 14 to determine volumetric flow rate. Referring to Fig. 14, a flow meter 70 embodying the present invention includes the ability to measure volumetric flow rate of the mixture by measuring the unsteady pressures generated by vortical disturbance 88 propagating in the mixture. The flow meter 70 uses one or both of the following techniques to determine the convection velocity of the vortical disturbances within the fluid/particle mixture 12 by:

1) Cross correlating unsteady pressure variations using an array of unsteady pressure sensors.

2) Characterizing the convective ridge of the vortical disturbances using an array of unsteady pressure sensors.

The overwhelming majority of industrial process flows involve turbulent flow. Turbulent fluctuations within the process flow govern many of the flow properties of practical interest including the pressure drop, heat transfer, and mixing. For engineering applications, considering only the time-averaged properties of turbulent flows is often sufficient for design purposes. For sonar flow metering technology, understanding the time-averaged velocity profile in turbulent flow provides a means to interpret the relationship between speed at which coherent structures convect and the volumetrically averaged flow rate within a pipe.

For turbulent flows, the time-averaged axial velocity varies with radial position, from zero at the wall to a maximum at the centerline of the pipe. The flow near the wall is characterized by steep velocity gradients and transitions to relatively uniform core flow near the center of the pipe. Fig. 15 shows a representative schematic of a velocity profile and coherent vortical flow structures 88 present in fully developed turbulent pipe flow 12. The vortical structures 88 are superimposed over time averaged velocity profile within the pipe 14 and contain temporally and spatially random fluctuations with magnitudes typically less than 10% percent of the mean flow velocity.

From a volumetric flow measurement perspective, the volumetrically averaged flow velocity is of interest. The volumetrically averaged flow velocity, defined as V=Q/A, is a useful, but arbitrarily defined property of the flow. Here, A is the cross sectional area of the pipe and Q is the volumetric flow rate. In fact, given the velocity profile within the pipe, little flow is actually moving at this speed.

Turbulent pipes flows are highly complex flows. Predicting the details of any turbulent flow is one of nature's great-unsolved problems. However, much is known regarding the statistical properties of the flow. For instance, turbulent pipe flows contain self-generating, coherent vortical structures often termed "turbulent eddies". The maximum length scale of these eddies is set by the diameter of the pipe. These structures remain coherent for several pipe diameters downstream, eventually breaking down into progressively smaller eddies until the energy is dissipated by viscous effects.

Experimental investigations have established that eddies generated within turbulent boundary layers convect at roughly 80% of maximum flow velocity. For pipe flows, this implies that turbulent eddies will convect at approximately the volumetrically averaged flow velocity within the pipe. The precise relationship between the convection speed of turbulent eddies and the flow rate for each class of meters can be calibrated empirically as described below.

The flow meter 70 of Fig. 14 determines the convection velocity of the vortical disturbances within the fluid/particle mixture by cross correlating unsteady pressure variations using an array of unsteady pressure sensors, similar to that shown in U.S. Patent Application Serial No. 10/007,736, filed November 8, 2001, entitled "Flow Rate Measurement Using Unsteady Pressures", which is incorporated herein by reference.

Referring to Fig. 14, the flow meter 70 includes a sensing section 72 along a pipe 12 and a signal processing unit 74. The pipe (or conduit) 14 has two measurement regions 76,78 located a distance $\Delta X$ apart along the pipe 14. At the first measurement region 76 are two unsteady (or dynamic or ac) pressure sensors 80,82, located a distance $X_1$ apart, capable of measuring the unsteady pressure in the pipe 14, and at the second measurement region 78, are two other unsteady pressure sensors 84,86, located a distance $X_2$ apart, capable of measuring the unsteady pressure in the pipe 14. Each pair of pressure sensors 80,82 and 84,86 act as spatial filters to remove certain acoustic signals from the unsteady pressure signals, and the distances $X_1,X_2$ are determined by the desired filtering characteristic for each spatial filter, as discussed hereinafter.

The flow meter 70 of the present invention measures velocities associated with unsteady flow fields and/or pressure disturbances represented by 88 associated therewith relating to turbulent eddies (or vortical flow fields), inhomogeneities in the flow (such as bubbles, slugs, and the like), or any other properties of the flow, fluid, or pressure, having time varying or stochastic properties that are manifested at least in part in the form of unsteady pressures. The vortical flow fields are generated within the fluid of the pipe 14 by a variety of non-discrete sources such as remote machinery, pumps, valves, elbows, as well as the fluid flow itself. It is this last source, the fluid flowing within the pipe, that is a generic source of vortical flow fields primarily caused by the shear forces between the fluid and the wall of the pipe that assures a minimum level of disturbances for any fluid piping systems for which the present invention takes unique advantage. The flow generated vortical flow fields generally increase with mean flow velocity and do not occur at any predeterminable frequency. As such, no external discrete vortex generating source is required within the present invention and thus may operate using passive detection. It is within the scope of the present that the pressure sensor spacing may be known or arbitrary and that as few as two sensors are required if certain information is known about the acoustic properties of the system as will be more fully described herein below.

The vortical flow fields 88 are, in general, comprised of pressure disturbances having a wide variation in length scales and which have a variety of coherence length scales such as that described in the reference "Sound and Sources of Sound", A. P.Dowling et al, Halsted Press, 1983, which is incorporated by reference to the extend of understanding the invention. Certain of these vortical flow fields 88 convect at or near/or related to the mean velocity of at least one of the elements within a mixture flowing in a pipe. The vortical pressure disturbances 15 that contain information regarding convection velocity have temporal and spatial length scales as well as coherence length scales that differ from other disturbances in the flow. The present invention utilizes these properties to preferentially select disturbances of a desired axial length scale and coherence length scale as will be more fully described hereinafter. For illustrative purposes, the terms vortical flow field and vortical pressure field will be used to describe the above-described group of unsteady pressure fields having temporal and spatial length and coherence scales described herein.

The pressures $P_1,P_2,P_3,P_4$ may be measured through holes in the pipe 14 ported to external pressure sensors or by other techniques discussed hereinafter. The pressure sensors 80,82,84,86 provide time-based pressure signals $P_1(t),P_2(t),P_3(t), P_4(t)$ on lines 90 - 93, respectively, to signal processing unit 74 which provides a convection velocity signal $U_c(t)$ on a line 96 which is related to an average flow rate $U_f(t)$ of the fluid flowing in the pipe 14.

Also, some or all of the functions within the signal processing unit 74 may be implemented in software (using a microprocessor or computer) and/or firmware, or may be implemented using analog and/or digital hardware, having sufficient memory, interfaces, and capacity to perform the functions described herein.

In particular, in the processing unit 74, the pressure signal $P_1(t)$ on the line 90 is provided to a positive input of a summer 100 and the pressure signal $P_2(t)$ on the line 91 is provided to a negative input of the summer 100. The output of the summer 100 is provided to line 104 indicative of the difference between the two pressure signals $P_1,P_2$ (e.g., $P_1-P_2=P_m$).

The pressure sensors 80,82 together with the summer 100 create a spatial filter 76. The line 104 is fed to bandpass filter 108, which passes a predetermined passband of frequencies and attenuates frequencies outside the passband. In accordance with the present invention, the passband of the filter 108 is set to filter out (or attenuate) the dc portion and the high frequency portion of the input signals and to pass the frequencies therebetween. Other passbands may be used in other embodiments, if desired. Passband filter 108 provides a filtered signal $P_{asf}1$ on a line 112 to Cross-Correlation Logic 116, described hereinafter.

The pressure signal $P_3(t)$ on the line 92 is provided to a positive input of a summer 102 and the pressure signal $P_4(t)$ on the line 93 is provided to a negative input of the summer 102. The pressure sensors 83,84 together with the summer 102 create a spatial filter 78. The output of the summer 102 is provided on a line 106 indicative of the difference between the two pressure signals $P_3,P_4$ (e.g., $P_3-P_4= P_{as2}$). The line 106 is fed to a bandpass filter 110, similar to the bandpass filter 108 discussed hereinbefore, which passes frequencies within the passband and attenuates frequencies outside the passband. The filter 110 provides a filtered signal $P_{asf}2$ on a line 114 to the Cross-Correlation Logic 116. The signs on the summers 100,102 may be swapped if desired, provided the signs of both summers are swapped together. In addition, the pressure signals $P_1,P_2,P_3,P_4$ may be scaled prior to presentation to the summers 100,102.

The Cross-Correlation Logic 116 calculates a known time domain cross-correlation between the signals $P_{asf1}$ and $P_{asf2}$ on the lines 112,114, respectively, and provides an output signal on a line 118 indicative of the time delay $\tau$ it takes for an vortical flow field 88 (or vortex, stochastic, or vortical structure, field, disturbance or perturbation within the flow) to propagate from one sensing region 76 to the other sensing region 78. Such vortical flow disturbances, as is known, are coherent dynamic conditions that can occur in the flow which substantially decay (by a predetermined amount) over a predetermined distance (or coherence length) and convect (or flow) at or near the average velocity of the fluid flow. As described above, the vortical flow field 88 also has a stochastic or vortical pressure disturbance associated with it. In general, the vortical flow disturbances 88 are distributed throughout the flow, particularly in high shear regions,

**EP 1 476 727 B1**

such as boundary layers (e.g., along the inner wall of the pipe 14) and are shown herein as discrete vortical flow fields 88. Because the vortical flow fields (and the associated pressure disturbance) convect at or near the mean flow velocity, the propagation time delay $\tau$ is related to the velocity of the flow by the distance $\Delta X$ between the measurement regions 76,78, as discussed hereinafter.

Although pressure disturbances associated with vortical flow fields 88 occur naturally in most flow conditions, an optional circumferential groove (not shown) may be used in the inner diameter of the pipe 14 to help generate unsteady flow fields in the form of vertices into the flow. However, the groove is not required for the present invention to operate, due to vortex generation which naturally occurs along the pipe inner wall, as discussed hereinbefore. Instead of a single circumferential groove a plurality of axially spaced circumferential grooves may be used. The dimensions and geometry of the groove(s) 70 may be set based on the expected flow conditions and other factors. Other techniques may be used as vortex generators if desired including those that may protrude within the inner diameter of pipe 14.

Referring to Fig. 14, a spacing signal $\Delta X$ on a line 120 indicative of the distance $\Delta X$ between the sensing regions 76,78 is divided by the time delay signal $\tau$ on the line 118 by a divider 122 which provides an output signal on the line 96 indicative of the convection velocity $U_c(t)$ of the fluid flowing in the pipe 14, which is related to (or proportional to or approximately equal to) the average (or mean) flow velocity $U_f(t)$ of the fluid, as defined below:

$$U_c(t) = \Delta X/\tau \propto U_f(t) \qquad \text{Eq. 1}$$

The convection velocity $U_c(t)$ may then be calibrated to more precisely determine the mean velocity $U_f(t)$ if desired. The result of such calibration may require multiplying the value of the convection velocity $U_c(t)$ by a calibration constant (gain) and/or adding a calibration offset to obtain the mean flow velocity $U_f(t)$ with the desired accuracy. Other calibration may be used if desired. For some applications, such calibration may not be required to meet the desired accuracy. The velocities $U_f(t),U_c(t)$ may be converted to volumetric flow rate by multiplying the velocity by the cross-sectional area of the pipe.

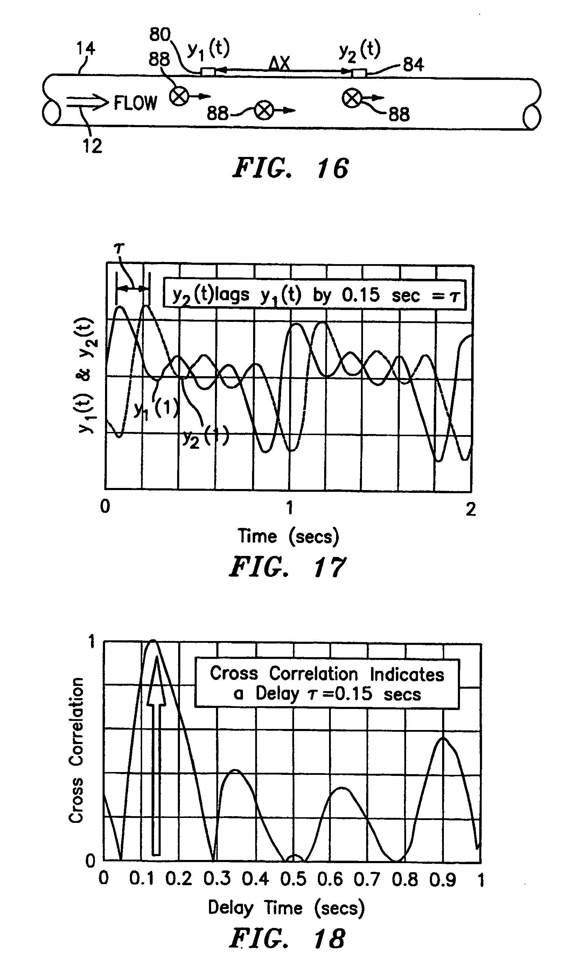

Referring to Figs. 16 - 18, as is known, cross-correlation may be used to determine the time delay $\tau$ between two signals $y_1(t),y_2(t)$ separated by a known distance $\Delta X$, that are indicative of quantities 80 that convect with the flow (e.g., density perturbations, concentration perturbations, temperature perturbations, vortical pressure disturbances, and other quantities). In Fig. 16, the signal $y_2(t)$ lags behind the signal $y_1(t)$ by 0.15 seconds. If a time domain cross-correlation is taken between the two signals $y_1(t),y_2(t)$, the result is shown in Fig. 17 as a curve 124. The highest peak 126 of the curve 124 shows the best fit for the time lag $\tau$ between the two signals $y_1(t),y_2(t)$ is at 0.15 seconds which matches the reference time delay shown in Fig. 17.

Referring to Fig. 14, as discussed hereinbefore, since pressure disturbances associated within the vortical flow field 88 convect (or flow) at or near the average velocity of the fluid flowing in the pipe 14, the vortical pressure disturbances observed at the downstream location are substantially a time lagged version of the vortical pressure disturbances observed at the upstream location. However, the total vortical pressure perturbations or disturbances in a pipe may be expressed as being comprised of vortical pressure disturbances ($P_{vortical}$), acoustic pressure disturbances ($P_{acoustic}$) and other types of pressure disturbances ($P_{other}$) as shown below expressed in terms of axial position along the pipe at any point in time:

$$P(x,t) = P_{vortical}(x,t) + P_{acoustic}(x,t) + P_{other}(x,t) \qquad \text{Eq. 2}$$

As a result, the unsteady pressure disturbances $P_{vortical}$ can be masked by the acoustic pressure disturbances $P_{acoustic}$ and the other types of pressure disturbances $P_{other}$. In particular, the presence of the acoustic pressure disturbances that propagate both upstream and downstream at the speed of sound in the fluid (sonic velocity), can prohibit the direct measurement of velocity from cross-correlation of direct vortical pressure measurements.

The present invention uses temporal and spatial filtering to precondition the pressure signals to effectively filter out the acoustic pressure disturbances $P_{acoustic}$ and other long wavelength (compared to the sensor spacing) pressure disturbances in the pipe 14 at the two sensing regions 76,78 and retain a substantial portion of the vortical pressure disturbances $P_{vortical}$ associated with the vortical flow field 88 and any other short wavelength (compared to the sensor spacing) low frequency pressure disturbances $P_{other}$. In accordance with the present invention, if the low frequency pressure disturbances $P_{other}$ are small, they will not substantially impair the measurement accuracy of $P_{vortical}$.

The $P_{vortical}$ dominated signals from the two regions 76,78 are then cross-correlated to determine the time delay $\tau$ between the two sensing locations 76,78. More specifically, at the sensing region 72, the difference between the two pressure sensors 80,82 creates a spatial filter 76 that effectively filters out (or attenuates) acoustic disturbances for which the wavelength $\lambda$ of the acoustic waves propagating along the fluid is long (e.g., ten-to-one) compared to the

spacing $X_1$ between the sensors. Other wavelength to sensor spacing ratios may be used to characterize the filtering, provided the wavelength to sensor spacing ratio is sufficient to satisfy the two-to-one spatial aliasing Nyquist criteria.

Thus, if the pressure sensors $P_1,P_2$ have an axial spacing $X_1$, and assuming that the spatial filter 76 will attenuate acoustic wavelengths longer than about 10 times the sensor spacing $X_1$, the smallest acoustic wavelength $\lambda$min that is attenuated would be:

$$\lambda_{min} = 10\ (X_1) \qquad\qquad Eq.\ 3$$

One dimensional acoustic disturbances are also governed by the following known inverse wavelength-frequency relation:

$$\lambda = a\ /\ f \ \ or\ \ f = a\ /\ \lambda \qquad\qquad Eq.\ 4$$

where a is the speed of sound of the fluid, f is the frequency of the acoustic disturbance, and $\lambda$ is the wavelength of the acoustic disturbance.

Using Eq. 4, such a spatial filter would filter out frequencies below about:

$$f_{max}\ =\ a/\lambda_{min} \qquad\qquad Eq.\ 5$$

The above discussion on the spatial filter 76 also applies to the second spatial filter 78 comprising the other pair of pressure signals $P_3,P_4$, axially spaced a distance $X_2$ apart, which provides the differenced vortical pressure signal $P_{as2}$.

The second technique of determining the convection velocity of the vortical disturbances within the fluid/ particle mixture is by characterisizing the convective ridge of the vortal disturbances using an array of unsteady pressure sensors, as will be described.

The sonar flow metering methodology uses the convection velocity of coherent structure with turbulent pipe flows to determine the volumetric flow rate. The convection velocity of these eddies 88 is determined by applying sonar arraying processing techniques to determine the speed at which the eddies convect past an axial array of unsteady pressure measurements distributed along the pipe 14.

The sonar-based algorithms determine the speed of the eddies by characterizing both the temporal and spatially frequency characteristics of the flow field. For a train of coherent eddies convecting past a fixed array of sensors, the temporal and spatial frequency content of pressure fluctuations are related through the following relationship:

$$\omega = \frac{k}{U_{convect}}$$

Here k is the wave number, defined as $k=2\pi/\lambda$ and has units of 1/length, $\omega$ is the temporal frequency in rad/sec, and $U_{convect}$ is the convection velocity. Thus, the shorter the wavelength (larger k) is, the higher the temporal frequency.

In sonar array processing, the spatial / temporal frequency content of time stationary sound fields are often displayed using "k-$\omega$ plots". K-$\omega$ plots are essentially three-dimensional power spectra in which the power of a sound field is decomposed into bins corresponding to specific spatial wave numbers and temporal frequencies. On a k-$\omega$ plot, the power associated with a pressure field convecting with the flow is distributed in regions which satisfies the dispersion relationship developed above. This region is termed "the convective ridge" (Beranek, 1992) and the slope of this ridge on a k-w plot indicates the convective velocity of the pressure field. This suggests that the connective velocity of turbulent eddies, and hence flow rate within a pipe, can be determined by constructing a k-$\omega$ plot from the output of a phased array of sensor and identifying the slope of the convective ridge.

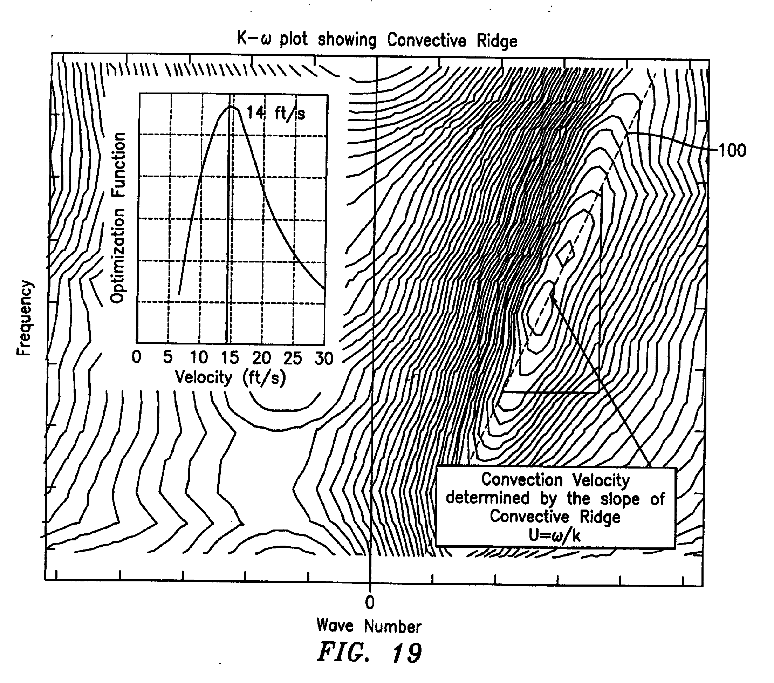

Fig. 19 shows an example of a k-$\omega$ plot generated from a phased array of pressure sensors. The power contours show a well-defined convective ridge. A parametric optimization method was used to determine the "best" line representing the slope of the convective ridge 100. For this case, a slope of 4,33m/s (14.2 ft/sec) was determined. The intermediate result of the optimization procedure is displayed in the insert, showing that optimized value is a unique and well-defined optima.

The k-w plot shown in Fig. 19 illustrates the fundamental principle behind sonar based flow measure, namely that axial arrays of pressure sensors can be used in conjunction with sonar processing techniques to determine the speed at which naturally occurring turbulent eddies convect within a pipe.

The pressure sensors 15-18 described herein may be any type of pressure sensor, capable of measuring the unsteady (or ac or dynamic) pressures within a pipe 14, such as piezoelectric, optical, capacitive, resistive (e.g., Wheatstone bridge), accelerometers (or geophones), velocity measuring devices, displacement measuring devices, etc. If optical pressure sensors are used, the sensors 15-18 may be Bragg.grating based pressure sensors, such as that described in US Patent Application, Serial No. 08/925,598, entitled "High Sensitivity Fiber Optic Pressure Sensor For Use In Harsh Environments", filed Sept. 8, 1997, now U.S. Patent 6,016,702. Alternatively, the sensors 14 may be electrical or optical strain gages attached to or embedded in the outer or inner wall of the pipe which measure pipe wall strain, including microphones, hydrophones, or any other sensor capable of measuring the unsteady pressures within the pipe 14. In an embodiment of the present invention that utilizes fiber optics as the pressure sensors 14 they may be connected individually or may be multiplexed along one or more optical fibers using wavelength division multiplexing (WDM), time division multiplexing (TDM), or any other optical multiplexing techniques.

For any of the embodiments described herein, the pressure sensors, including electrical strain gages, optical fibers and/or gratings among others as described herein, may be attached to the pipe by adhesive, glue, epoxy, tape or other suitable attachment means to ensure suitable contact between the sensor and the pipe 14. The sensors may alternatively be removable or permanently attached via known mechanical techniques such as mechanical fastener, spring loaded, clamped, clam shell arrangement, strapping or other equivalents. Alternatively, the strain gages, including optical fibers and/or gratings, may be embedded in a composite pipe. If desired, for certain applications, the gratings may be detached from (or strain or acoustically isolated from) the pipe 14 if desired.

It is also within the scope of the present invention that any other strain sensing technique may be used to measure the variations in strain in the pipe, such as highly sensitive piezoelectric, electronic or electric, strain gages attached to or embedded in the pipe 14.

In certain embodiments of the present invention, a piezo-electronic pressure transducer may be used as one or more of the pressure sensors 15-18 and it may measure the unsteady (or dynamic or ac) pressure variations inside the pipe 14 by measuring the pressure levels inside of the pipe. In an embodiment of the present invention, the sensors 14 comprise pressure sensors manufactured by PCB Piezotronics. In one pressure sensor there are integrated circuit piezoelectric voltage mode-type sensors that feature built-in microelectronic amplifiers, and convert the high-impedance charge into a low-impedance voltage output. Specifically, a Model 106B manufactured by PCB Piezotronics is used which is a high sensitivity, acceleration compensated integrated circuit piezoelectric quartz pressure sensor suitable for measuring low pressure acoustic phenomena in hydraulic and pneumatic systems. It has the unique capability to measure small pressure changes of less than 6,89 Pa (0.001 psi) under high static conditions. The 106B has a 43,51 $\mu$V/Pa (300 mV/psi) sensitivity and a resolution of 91 dB 0,689 Pa (0.0001 psi).

The pressure sensors incorporate a built-in MOSFET microelectronic amplifier to convert the high-impedance charge output into a low-impedance voltage signal. The sensor is powered from a constant-current source and can operate over long coaxial or ribbon cable without signal degradation. The low-impedance voltage signal is not affected by triboelectric cable noise or insulation resistance-degrading contaminants. Power to operate integrated circuit piezoelectric sensors generally takes the form of a low-cost, 24 to 27 VDC, 2 to 20 mA constant-current supply. A data acquisition system of the present invention may incorporate constant-current power for directly powering integrated circuit piezoelectric sensors.

Most piezoelectric pressure sensors are constructed with either compression mode quartz crystals preloaded in a rigid housing, or unconstrained tourmaline crystals. These designs give the sensors microsecond response times and resonant frequencies in the hundreds of kHz, with minimal overshoot or ringing. Small diaphragm diameters ensure spatial resolution of narrow shock waves.

The output characteristic of piezoelectric pressure sensor systems is that of an AC-coupled system, where repetitive signals decay until there is an equal area above and below the original base line. As magnitude levels of the monitored event fluctuate, the output remains stabilized around the base line with the positive and negative areas of the curve remaining equal.

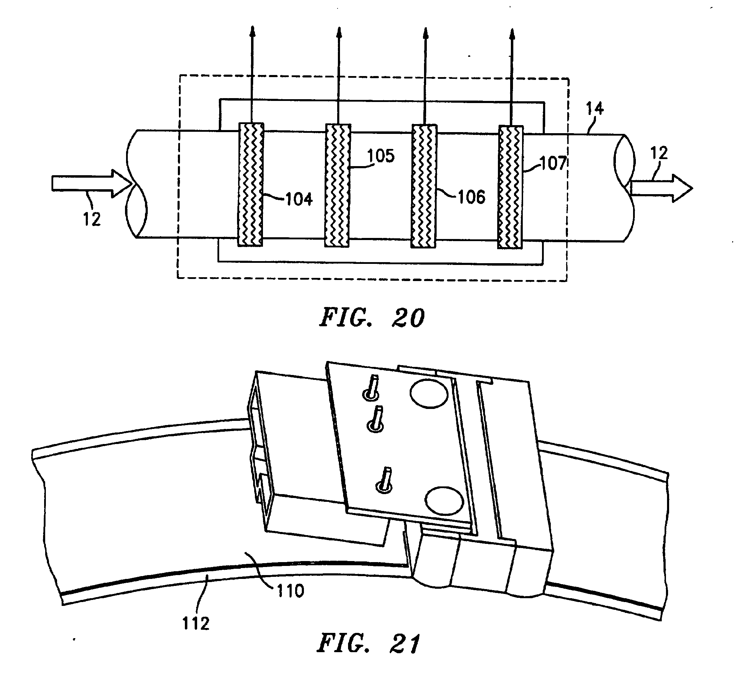

Furthermore the present invention contemplates that each of the pressure sensors 15-18 of the flow meters 10,70 may include a piezoelectric sensor 104 -107 that provides a piezoelectric material 110 to measure the unsteady pressures of the fluid/particle mixture 12 as shown in Fig. 20. The piezoelectric material, such as the polymer, polarized fluoropolymer, polyvinylidene fluoride (PVDF), measures the strain induced within the process pipe 14 due to unsteady pressure variations within the process mixture 12. Strain within the pipe is transduced to an output voltage or current by the attached piezoelectric sensors 104-107.

As best shown in Fig. 21, the PVDF material 110 is adhered to the outer surface of a steel strap 112 that extends around and clamps onto the outer surface of the pipe 14. The piezoelectric sensing element is typically conformal to allow complete or nearly complete circumferential measurement of induced strain. The sensors can be formed from PVDF films, co-polymer films, or flexible PZT sensors, similar to that described in "Piezo Film Sensors technical Manual" provided by Measurement Specialties, Inc., which is incorporated herein by reference. The advantages of this technique are the following:

1. Non-intrusive flow rate measurements
2. Low cost
3. Measurement technique requires no excitation source. Ambient flow noise is used as a source.
4. Flexible piezoelectric sensors can be mounted in a variety of configurations to enhance signal detection schemes. These configurations include a) co-located sensors, b) segmented sensors with opposing polarity configurations, c) wide sensors to enhance acoustic signal detection and minimize vortical noise detection, d) tailored sensor geometries to minimize sensitivity to pipe modes, e) differencing of sensors to eliminate acoustic noise from vortical signals.
5. Higher Temperatures.(140C) (co-polymers)

While the present invention is capable of measuring solid particles suspended in a fluid, one will appreciate that other multi-phase mixtures or flows may be measured using an array of sensors, such as steam flow. It is further recognize the effects of dispersion on large solid particles in a fluid would be similar to large droplets of a liquid dispersed in a gas or air, and thus similar considerations when measuring the steam quality and droplet size should be addressed.
It should be understood that any of the features, characteristics, alternatives or modifications described regarding a particular embodiment herein may also be applied, used, or incorporated with any other embodiment described herein.
Although the invention has been described and illustrated with respect to exemplary embodiments thereof, the foregoing and various other additions and omissions may be made therein and thereto without departing from the spirit and scope of the present invention.

**Claims**

1.  An apparatus (10) for measuring at least one parameter of a particle/fluid mixture (12) in a pipe (14), comprising:

    a spatial array of at least two pressure sensors (15, 16, 17, 18), disposed at different axial locations along the pipe (14), and each measuring an unsteady pressure within the pipe (14) at a corresponding axial location ($X_1$, $X_2$, $X_3$, $X_N$), each of said sensors providing a pressure signal indicative of the unsteady pressure within the pipe (14) at said axial location ($X_1$, $X_2$, $X_3$, $X_N$) of a corresponding one of said sensors (15, 16, 17, 18); and
    a signal processor (30), responsive to said pressure signals,
    **characterized in that** the signal processor (30) is adapted to determine the speed of sound propagating to the mixture (12) as a function of frequency to characterize dispersion properties of the mixture (12) and compare the dispersion properties of the mixture (12) to a dispersion model of the mixture (12) to provide a signal indicative of the at least one parameter of the mixture (12) in the pipe (14).

2.  The apparatus (10) of claim 1, wherein the pressure sensors (15, 16, 17, 18) are selected.from the group comprising piezoelectric devices, optical devices, capacitive devices, resistive devices, velocity measuring devices, displacement measuring devices, and accelerometers or geophones.

3.  The apparatus (10) of claim 1 wherein the pressure sensors (15, 16, 17, 18) include strain-based sensors or gages.

4.  The apparatus (10) of claim 1 the dispersion model of which is analytically derived.

5.  The apparatus (10) of claim 1 wherein the analytically derived dispersion model is:

$$a_{mix}(\omega) = a_f \sqrt{\cfrac{1}{1 + \cfrac{\varphi_p \rho_p}{\rho_f \left(1 + \omega^2 \cfrac{\rho_p^2 v_p^2}{K^2}\right)}}}$$

wherein

$\alpha_{mix}$ is the speed of sound propagating through the mixture;
$\alpha_f$ is the speed of sound propagating through the fluid;
$\rho_f$ is the density of the fluid;
$\rho_p$ is the density of the particle;
$\omega$ is the frequency;
$v_p$ is the volume of particle;
K is a proportional ity constant;
$\varphi_p$ is the volumetric phase fraction.

6. The apparatus (10) of claim 1 adapted for measuring a solid/fluid mixture (12) including one of a solid/liquid mixture (12) and a solid/air mixture (12).

7. The apparatus (10) of claim 1 adapted for measuring at least one parameter of the mixture (12) including at least one on a solid/liquid ratio and an average size of the particles of the mixture (12).

8. The apparatus (10) of claim 1 wherein the signal processor (30) is further adapted to characterize the dispersion properties of the mixture (12) in response to viscosity of the fluid, density of the fluid, density of the particles, estimated volume of particles, and estimated volumetric phase fraction of the mixture (12).

9. The apparatus (10) of claim 1, wherein the dispersive characteristic of the mixture (12) provides a measurement of the average particle size and the solid/fluid ratio of the mixture (12).

10. The apparatus (10) of claim 1 which includes the ability to measure of volumetric flow rate of the mixture (12) by comparing the difference of the speed of one dimensional sound waves propagating with and against the mean flow.

11. The apparatus (10) of claim 1 wherein each sensor is adapted to measure an acoustic pressure and provides a signal indicative of an acoustic noise within the pipe (14).

12. The apparatus (10) of claim 1 wherein said signal processor (30) is adapted to provide a frequency based signal for each of said pressure signals.

13. The apparatus (10) of claim 1 comprising at least three of said sensors (15, 16, 17).

14. The apparatus (10) of claim 1 wherein the array of pressure sensors (15, 16, 17, 18) are spaced sufficiently such that the entire length of the array is at least a significant fraction of the measured wavelength of the acoustic waves being measured.

15. The apparatus (10) of claim 1 wherein the signal processor (30) is adapted to define an acoustic ridge in the k-$\omega$ plane and determines the slope of the at least a portion of an acoustic ridge to determine the speed of sound propagating through the mixture (12).

16. A method for measuring at least one parameter of a solid/fluid mixture (12) in a pipe (14), said method comprising:

measuring unsteady pressures within the pipe (14) at at least two predetermined axial measurement locations $(X_1, X_2, X_3, X_N)$ along the pipe (14) to provide a pressure signal indicative of the unsteady pressure within the pipe (14) at each of the at least two predetermined axial measurement locations $(X_1, X_2, X_3, X_N)$;

**characterized in that** said method further comprises

calculating the at least one parameter of the solid/fluid mixture (12) in the pipe (14) using the unsteady pressure measured at the axial measurement locations ($X_1$, $X_2$, $X_3$, $X_N$) by determining the speed of sound propagating through the mixture (12) as a function of frequency to characterize dispersion properties of the mixture (12) and comparing the dispersion properties of the mixture (12) to a dispersion model of the mixture (12).

17. The method of claim 16 wherein the pressure sensors (15, 16, 17, 18) are selected from the group comprising piezoelectric devices, optical devices, capacitive devices, resistive devices, velocity measuring devices, displacement measuring devices, and accelerometers or geophones.

18. The method of claim 16 using a dispersion model which is analytically derived.

19. The method of claim 16 using a analytically derived dispersion model which is:

$$a_{mix}(\omega) = a_f \sqrt{\cfrac{1}{1 + \cfrac{\varphi_p \rho_p}{\rho_f \left(1 + \omega^2 \dfrac{\rho_p^2 v_p^2}{K^2}\right)}}}$$

wherein

$\alpha_{mix}$ is the speed of sound propagating through the mixture;
$\alpha_f$ is the speed of sound propagating through the fluid;
$\rho_f$ is the density of the fluid;
$\rho_p$ is the density of the particle;
$\omega$ is the frequency;
$v_p$ is the volume of particle;
$K$ is a proportionality constant;
$\varphi_p$ is the volumetric phase fraction.

20. The method of claim 16 for measuring a solid/fluid mixture (12) including one of a solid/liquid mixture (12) and a solid/air mixture (12).

21. The method of claim 16 for measuring at least one parameter of the mixture (12) including at least one on a solid/liquid ratio and an average solid size of the mixture (12).

22. The method of claim 16, wherein cross-correlation is used to determine the time delay between two signals separated by a known distance that are indicative of quantities (80) that convect with the flow including at least one of density perturbations, concentration perturbations, temperature perturbations, vortical pressure disturbances.

23. The method of claim 16, wherein the dispersive characteristic of the mixture (12) provides a measurement of the average particle size and the solid/fluid ratio of the mixture (12).

24. The method of claim 16, which includes the ability to measure of volumetric flow rate of the mixture (12) by comparing the difference of the speed of one dimensional sound waves propagating with and against the mean flow.

25. The method of claim 16 wherein each sensor measures an acoustic pressure and provides a signal indicative of an acoustic noise within the pipe (14).

26. The method of claim 16 wherein said signal processor (30) provides a frequency based signal for each of said pressure signals.

**27.** The method of claim 16 using at least three of said sensors.

**28.** The method of claim 16 using an array of pressure sensors (15, 16, 17, 18) which are spaced sufficiently such that the entire length of the array is at least a significant fraction of the measured wavelength of the acoustic waves being measured.

**29.** The method of claim 16, wherein the method includes to determine a best line representing the slope of an acoustic ridge in the k-ω plane and to determine the slope said portion of the acoustic ridge in order to determine the speed of sound propagating through the mixture.

**30.** The method of claim 16 wherein the pressure sensors (15, 16, 17, 18) include strain-based sensors or gages.

**Patentansprüche**

**1.** Vorrichtung (10) zum Messen wenigstens eines Parameters einer Partikel-Fluid-Mischung (12) in einer Röhre (14), aufweisend:

eine räumliche Anordnung von wenigstens zwei Drucksensoren (15, 16, 17, 18), die an zwei verschiedenen axialen Stellen entlang der Röhre (14) angeordnet sind, wobei jeder einen schwankenden Druck in der Röhre (14) an einer zugehörigen axialen Stelle ($X_1, X_2, X_3, X_N$) misst und jeder der Sensoren ein Drucksignal bereitstellt, das den schwankenden Druck in der Röhre (14) an der axialen Stelle ($X_1, X_2, X_3, X_N$) eines zugehörigen der Sensoren (15, 16, 17, 18) anzeigt; und
einen Signalprozessor (13), der auf diese Drucksignale reagiert,
**dadurch gekennzeichnet, dass** der Signalprozessor (30) eingerichtet ist, die Geschwindigkeit des sich durch die Mischung (12) ausbreitenden Schalls als Funktion der Frequenz zu bestimmen, um Dispersionseigenschaften der Mischung (12) zu beschreiben und die Dispersionseigenschaften der Mischung (12) mit einem Dispersionsmodell der Mischung (12) zu vergleichen, um ein Signal bereitzustellen, das wenigstens einen Parameter der Mischung (12) in der Röhre (14) anzeigt.

**2.** Vorrichtung (10) nach Anspruch 1, bei der die Drucksensoren (15, 16, 17, 18) aus der Gruppe ausgewählt sind, die piezoelektrische Vorrichtungen, optische Vorrichtungen, kapazitive Vorrichtungen, Widerstandsvorrichtungen, Geschwindigkeitsmessungsvorrichtungen, Verschiebungsmessvorrichtungen und Beschleunigungsmessvorrichtungen oder Seismographen enthält.

**3.** Vorrichtung (10) nach Anspruch 1, wobei die Drucksensoren (15, 16, 17, 18) dehnungsbasierte Sensoren oder Messuhren aufweisen.

**4.** Vorrichtung (10) nach Anspruch 1, bei dem das Dispersionsmodell analytisch abgeleitet ist.

**5.** Vorrichtung (10) nach Anspruch 1, wobei das analytisch abgeleitete Dispersionsmodell

$$a_{mix}(\omega) = a_f \sqrt{\cfrac{1}{1 + \cfrac{\varphi_p \rho_p}{\rho_f \left(1 + \omega^2 \dfrac{\rho_p^2 v_p^2}{K^2}\right)}}}$$

ist, wobei

$\alpha_{mix}$ die Geschwindigkeit von Schall ist, der sich durch die Mischung ausbreitet;
$\alpha_f$ die Geschwindigkeit von Schall ist, der sich durch das Fluid ausbreitet;
$\rho_f$ die Dichte des Fluids ist;
$\rho_p$ die Dichte des Partikels ist;

w die Frequenz ist;

$\nu_p$ das Volumen der Partikel ist;

K eine Proportionalitätskonstante ist;

$\varphi_p$ der volumetrische Phasenanteil ist.

6. Vorrichtung (10) nach Anspruch 1, die eingerichtet ist, um eine Feststoff/Fluid-Mischung (12) zu messen, die eine Feststoff/Flüssigkeits-Mischung (12) und eine Feststoff/Luft-Mischung (12) enthält.

7. Vorrichtung (10) nach Anspruch 1, die eingerichtet ist, wenigstens einen Parameter der Mischung (12) zu messen, der wenigstens ein Feststoff/Flüssigkeits-Verhältnis oder eine durchschnittliche Größe der Partikel der Mischung (12) enthält.

8. Vorrichtung (10) nach Anspruch 1, wobei der Signalprozessor (30) weiter eingerichtet ist, die Dispersionseigenschaften der Mischung (12) in Reaktion auf die Viskosität des Fluids, der Dichte des Fluids, der Dichte der Partikel, eines geschätzten Volumens der Partikel und eines geschätzten volumetrischen Phasenanteils der Mischung (12) zu beschreiben.

9. Vorrichtung (10) nach Anspruch 1, wobei die Dispersionseigenschaften der Mischung (12) eine Messung der durchschnittlichen Partikelgröße und des Feststoff/Fluid-Verhältnisses der Mischung (12) bereitstellen.

10. Vorrichtung (10) nach Anspruch 1, welche die Möglichkeit einschließt, die volumetrische Flussrate der Mischung (12) durch Vergleichen der Geschwindigkeitsdifferenz eindimensionaler Schallwellen, die sich mit und gegen die mittlere Strömung ausbreiten, zu bestimmen.

11. Vorrichtung (10) nach Anspruch 1, wobei jeder Sensor eingerichtet ist, einen akustischen Druck zu messen und ein Signal bereitstellt, das ein akustisches Geräusch innerhalb der Röhre (14) bezeichnet.

12. Vorrichtung (10) nach Anspruch 1, wobei der Signalprozessor (30) eingerichtet ist, für jedes der Drucksignale ein auf einer Frequenz basierendes Signal bereitzustellen.

13. Vorrichtung (10) nach Anspruch 1, die wenigstens drei der Sensoren (15, 16, 17) aufweist.

14. Vorrichtung (10) nach Anspruch 1, wobei die Drucksensoren (15, 16, 17, 18) der Anordnung ausreichend voneinander beabstandet sind, so dass die gesamte Länge der Anordnung wenigstens ein signifikanter Teil der gemessenen Wellenlänge der akustischen Wellen, die gemessen werden, ist.

15. Vorrichtung (10) nach Anspruch 1, wobei der Signalprozessor (30) eingerichtet ist, einen akustischen Grat in der k-w Ebene zu definieren und die Steigung wenigstens eines Bereichs der akustischen Grats bestimmt, um die Geschwindigkeit des sich durch die Mischung (12) ausbreitenden Schalls zu bestimmen.

16. Verfahren zum Messen wenigstens eines Parameters einer Feststoff/Fluid-Mischung (12) in einer Röhre (14), wobei das Verfahren umfasst:

Messen schwankender Drücke innerhalb der Röhre (14) an wenigstens zwei vorgegebenen axialen Meßstellen $(X_1, X_2, X_3. X_N)$ entlang der Röhre (14), um ein Drucksignal bereitzustellen, das den schwankenden Druck innerhalb der Röhre an jeder der wenigstens zwei vorgegebenen axialen Messstellen $(X_1, X_2, X_3, X_N)$ beschreibt; **dadurch gekennzeichnet, dass** das Verfahren weiterhin einschließt den wenigstens einen Parameter der Feststoff/Fluid-Mischung (12) in der Röhre (14) unter Benutzung des schwankenden Drucks, der an den axialen Messstellen $(X_1, X_2, X_3, X_N)$ gemessen worden ist, durch Bestimmen der Geschwindigkeit des Schalls, der sich durch die Mischung (12) ausbreitet, als eine Funktion der Frequenz, um Dispersionseigenschaften der Mischung (12) zu beschreiben und die Dispersionseigenschaften der Mischung (12) mit einem Dispersionsmodell der Mischung (12) zu vergleichen, zu berechnen.

17. Verfahren nach Anspruch 16, wobei die Drucksensoren (15, 16, 17, 18) aus der Gruppe ausgewählt sind, die piezoelektrische Vorrichtungen, optische Vorrichtungen, kapazitive Vorrichtungen, Widerstandsvorrichtungen, Geschwindigkeitsmessvorrichtungen, Verschiebungsmessvorrichtungen, Beschleunigungsmessvorrichtungen oder Seismographen enthält.

**18.** Verfahren nach Anspruch 16, das ein Dispersionsmodell benutzt, das analytisch abgeleitet ist.

**19.** Verfahren nach Anspruch 16, das ein analytisch abgeleitetes Dispersionsmodell benutzt, das

$$a_{mix}(\omega) = a_f \sqrt{\cfrac{1}{1 + \cfrac{\varphi_p \rho_p}{\rho_f \left(1 + \omega^2 \cfrac{\rho_p^2 v_p^2}{K^2}\right)}}}$$

ist, wobei

$\alpha_{mix}$ die Geschwindigkeit von Schall ist, der sich durch die Mischung ausbreitet;
$\alpha_f$ die Geschwindigkeit von Schall ist, der sich durch das Fluid ausbreitet;
$\rho_f$ die Dichte des Fluids ist;
$\rho_p$ die Dichte des Partikels ist;
$\omega$ die Frequenz ist;
$v_p$ das Volumen der Partikel ist;
$K$ eine Proportionalitätskonstante ist;
$\varphi_p$ der volumetrische Phasenanteil ist.

**20.** Verfahren nach Anspruch 16 zum Messen einer Feststoff/Fluid-Mischung (12) die eine Feststoff/Flüssigkeits-Mischung (12) oder eine Feststoff/Luft-Mischung (12) enthält.

**21.** Verfahren nach Anspruch 16 zum Messen wenigstens eines Parameters der Mischung (12) einschließlich wenigstens eines von einem Feststoff/Flüssigkeits-Verhältnis und einer durchschnittlichen Feststoffgröße der Mischung (12).

**22.** Verfahren nach Anspruch 16, wobei eine Kreuzkorrelation benutzt wird, um die Zeitverzögerung zwischen zwei Signalen zu bestimmen, die durch eine vorgegebene Distanz voneinander getrennt sind, und die Größen (80) beschreiben, die mit der Strömung konvektieren, einschließlich wenigstens einer von Dichtestörungen, Konzentrationsstörungen, Temperaturstörungen und Wirbeldruckstörungen.

**23.** Verfahren nach Anspruch 16, wobei die Dispersionseigenschaften der Mischung (12) eine Messung der durchschnittlichen Partikelgröße und des Feststoff/Fluid-Verhältnisses der Mischung (12) zur Verfügung stellen.

**24.** Verfahren nach Anspruch 16, das die Möglichkeit einschließt, die volumetrische Strömungsrate der Mischung (12) durch Vergleichen des Geschwindigkeitsunterschieds zwischen eindimensionalen Schallwellen, die sich mit und gegen die mittlere Strömung ausbreiten, zu bestimmen.

**25.** Verfahren nach Anspruch 16, wobei jeder Sensor einen akustischen Druck misst und ein Signal bereitstellt, das ein akustisches Geräusch innerhalb der Röhre (14) bezeichnet.

**26.** Verfahren nach Anspruch 16, wobei der Signalprozessor (30) für jedes der Drucksignale ein frequenzbasiertes Signal bereitstellt.

**27.** Verfahren nach Anspruch 16, das wenigstens drei der Sensoren benutzt.

**28.** Verfahren nach Anspruch 16, das eine Anordnung von Drucksensoren (15, 16, 17, 18) benutzt, die ausreichend voneinander beabstandet sind, so dass die Gesamtlänge der Anordnung wenigstens gleich einem signifikanten Teil der gemessenen Wellenlänge der akustischen Wellen, die gemessen werden, ist.

**29.** Verfahren nach Anspruch 16, wobei das Verfahren einschließt, eine Ausgleichsgerade zu bestimmen, welche die Steigung eines akustischen Grats in der k-ω Ebene beschreibt, und die Steigung dieses Bereiches des akustischen Grats zu bestimmen, um die Geschwindigkeit des Schalls, der sich durch die Mischung ausbreitet, zu bestimmen.

**30.** Verfahren nach Anspruch 16, wobei die Drucksensoren (15, 16, 17, 18) dehnungsbasierte Sensoren oder Messuhren einschließen.

## Revendications

**1.** Appareil (10) pour mesurer au moins un paramètre d'un mélange particules/fluide (12) dans un conduit (14), comprenant :

un réseau spatial d'au moins deux capteurs de pression (15, 16, 17, 18) qui sont disposés à différents endroits en direction axiale le long du conduit (14) et qui mesurent chacun une pression variable au sein du conduit (14) à un endroit correspondant en direction axiale ($X_1$, $X_2$, $X_3$, $X_N$), chacun desdits capteurs générant un signal de pression indiquant la pression variable régnant au sein du conduit (14) audit endroit en direction axiale ($X_1$, $X_2$, $X_3$, $X_N$) d'un desdits capteurs correspondants (15, 16, 17, 18) ; et
un processeur de signaux (30) sensible auxdits signaux de pression,
**caractérisé en ce que** le processeur de signaux (30) est conçu pour déterminer la vitesse du son qui se propage à travers le mélange (12) en fonction de la fréquence afin de caractériser les propriétés de dispersion du mélange (12) et pour comparer les propriétés de dispersion du mélange (12) à un modèle de dispersion du mélange (12) afin d'obtenir un signal indicateur dudit au moins un paramètre du mélange (12) dans le conduit (14).

**2.** Appareil (10) selon la revendication 1, dans lequel les capteurs de pression (15, 16, 17, 18) sont choisis parmi le groupe comprenant des dispositifs piézo-électriques, des dispositifs optiques, des dispositifs capacitifs, des dispositifs résistifs, des dispositifs de mesure de la vitesse, des dispositifs de mesure du déplacement ainsi que des accéléromètres ou des géophones.

**3.** Appareil (10) selon la revendication 1, dans lequel les capteurs de pression (15, 16, 17, 18) englobent des jauges ou des capteurs qui se basent sur la déformation.

**4.** Appareil (10) selon la revendication 1, dont le modèle de dispersion est dérivé par voie analytique.

**5.** Appareil (10) selon la revendication 1, dans lequel le modèle de dispersion dérivé par voie analytique est un modèle :

$$a_{mix}(\omega) = a_f \sqrt{\cfrac{1}{1 + \cfrac{\varphi_p \rho_p}{\rho_f \left(1 + \omega^2 \dfrac{\rho_p^2 v_p^2}{K^2}\right)}}}$$

dans lequel

$\alpha_{mix}$ représente la vitesse du son qui se propage à travers le mélange ;
$\alpha_f$ représente la vitesse du son qui se propage à travers le fluide ;
$\rho_f$ représente la densité du fluide ;
$\rho_p$ représente la densité des particules ;
$\omega$ représente la fréquence ;
$v_p$ représente le volume des particules ;
$K$ représente une constante de proportionnalité ;
$\varphi_p$ représente la fraction de la phase volumétrique.

**6.** Appareil (10) selon la revendication 1, conçu pour mesurer un mélange produit(s) solide(s)/fluide (12) y compris un mélange choisi parmi le groupe comprenant un mélange produit(s) solide(s)/liquide (12) et un mélange produit(s) solide(s)/air (12).

**7.** Appareil (10) selon la revendication 1, conçu pour mesurer au moins un paramètre du mélange (12), y compris au moins un paramètre choisi parmi le groupe comprenant le rapport produit(s) solide(s)/liquide et la granulométrie moyenne des particules du mélange (12).

**8.** Appareil (10) selon la revendication 1, dans lequel le processeur de signaux (30) est en outre conçu pour caractériser les propriétés de dispersion du mélange (12) en réponse à la viscosité du fluide, à la densité du fluide, à la densité des particules, au volume estimé des particules et à la fraction estimée de la phase volumétrique du mélange (12).

**9.** Appareil (10) selon la revendication 1, dans lequel la caractéristique dispersive du mélange (12) procure une mesure de la granulométrie moyenne et du rapport produit(s) solide(s)/fluide du mélange (12).

**10.** Appareil (10) selon la revendication 1, qui englobe la capacité de mesurer le débit volumétrique du mélange (12) par comparaison de la différence des vitesses des ondes acoustiques unidimensionnelles qui se propagent avec le débit moyen et de celles qui se déplacent à l'encontre de celui-ci.

**11.** Appareil (10) selon la revendication 1, dans lequel chaque capteur est conçu pour mesurer une pression acoustique et procure un signal indiquant un bruit acoustique au sein du conduit (14).

**12.** Appareil (10) selon la revendication 1, dans lequel ledit processeur de signaux (30) est conçu pour fournir un signal basé sur la fréquence pour chacun desdits signaux de pression.

**13.** Appareil (10) selon la revendication 1, comprenant au moins trois desdits capteurs (15, 16, 17).

**14.** Appareil (10) selon la revendication 1, dans lequel les capteurs de pression du réseau (15, 16, 17, 18) sont suffisamment espacés les uns des autres pour que la longueur totale du réseau représente au moins une fraction significative de la longueur d'onde mesurée des ondes acoustiques que l'on mesure.

**15.** Appareil (10) selon la revendication 1, dans lequel le processeur de signaux (30) est conçu pour définir une crête acoustique dans le plan $\kappa$-$\omega$ et détermine la pente de ladite au moins une portion d'une crête acoustique afin de déterminer la vitesse du son qui se propage à travers le mélange (12).

**16.** Procédé pour mesurer au moins un paramètre d'un mélange produit(s) solide(s)/fluide (12) dans un conduit (14), ledit procédé comprenant le fait de :

mesurer des pressions variables au sein du conduit (14) à au moins deux endroits de mesure prédéterminés en direction axiale ($X_1$, $X_2$, $X_3$, $X_N$) le long du conduit (14) pour procurer un signal de pression indiquant la pression variable régnant au sein du conduit (14) à chacun desdits au moins deux endroits de mesure prédéterminés en direction axiale ($X_1$, $X_2$, $X_3$, $X_N$) ;
**caractérisé en ce que** ledit procédé comprend en outre le fait de :

calculer ledit au moins un paramètre du mélange produit(s) solide(s)/fluide (12) dans le conduit (14) en utilisant la pression variable mesurée aux endroits de mesure en direction axiale ($X_1$, $X_2$, $X_3$, $X_N$) en déterminant la vitesse du son qui se propage à travers le mélange (12) en fonction de la fréquence afin de caractériser les propriétés de dispersion du mélange (12) et en comparant les propriétés de dispersion du mélange (12) à un modèle de dispersion du mélange (12).

**17.** Procédé selon la revendication 16, dans lequel les capteurs de pression (15, 16, 17, 18) sont choisis parmi le groupe comprenant des dispositifs piézo-électriques, des dispositifs optiques, des dispositifs capacitifs, des dispositifs résistifs, des dispositifs de mesure de la vitesse, des dispositifs de mesure du déplacement ainsi que des accéléromètres ou des géophones.

**18.** Procédé selon la revendication 16, qui utilise un modèle de dispersion que l'on dérive par voie analytique.

**19.** Procédé selon la revendication 16, qui utilise un modèle de dispersion dérivé par voie analytique, à savoir un modèle :

$$\alpha_{mix}(\omega) = \alpha_f \sqrt{\dfrac{1}{1 + \dfrac{\varphi_p \rho_p}{\rho_f \left(1 + \omega^2 \dfrac{\rho_p^2 v_p^2}{K^2}\right)}}}$$

dans lequel

$\alpha_{mix}$ représente la vitesse du son qui se propage à travers le mélange ;
$\alpha_f$ représente la vitesse du son qui se propage à travers le fluide ;
$\rho_f$ représente la densité du fluide ;
$\rho_p$ représente la densité des particules ;
$\omega$ représente la fréquence ;
$v_p$ représente le volume des particules ;
K représente une constante de proportionnalité ;
$\varphi_p$ représente la fraction de la phase volumétrique.

20. Procédé selon la revendication 16, pour mesurer un mélange produit(s) solide(s)/fluide (12) y compris un mélange choisi parmi le groupe comprenant un mélange produit(s) solide(s)/liquide (12) et un mélange produit(s) solide(s)/air (12).

21. Procédé selon la revendication 16, pour mesurer au moins un paramètre du mélange (12), y compris au moins un paramètre choisi parmi le groupe comprenant le rapport produit(s) solide(s)/liquide et la dimension moyenne du/des produits solides du mélange (12).

22. Procédé selon la revendication 16, dans lequel on utilise une corrélation croisée pour déterminer le temps de retard entre deux signaux, séparés d'une distance connue, qui fournissent des indications de valeurs (80) qui se déplacent par convection avec l'écoulement, y compris au moins un élément choisi parmi le groupe des perturbations de densité, des perturbations de concentration, des perturbations de température, des perturbations de pression tourbillonnaire.

23. Procédé selon la revendication 16, dans lequel la caractéristique dispersive du mélange (12) fournit une mesure de la granulométrie moyenne et du rapport produit(s) solide(s)/fluide du mélange (12).

24. Procédé selon la revendication 16, qui englobe la capacité de mesurer le débit volumétrique du mélange (12) par comparaison de la différence des vitesses des ondes acoustiques unidimensionnelles qui se propagent avec le débit moyen et de celles qui se déplacent à l'encontre de celui-ci.

25. Procédé selon la revendication 16, dans lequel chaque capteur mesure une pression acoustique et procure un signal indiquant un bruit acoustique au sein du conduit (14).

26. Procédé selon la revendication 16, dans lequel ledit processeur de signaux (30) fournit un signal basé sur la fréquence pour chacun desdits signaux de pression.

27. Procédé selon la revendication 16, dans lequel on utilise au moins trois desdits capteurs.

28. Procédé selon la revendication 16, dans lequel on utilise des capteurs de pression du réseau (15, 16, 17, 18) qui sont suffisamment espacés les uns des autres pour que la longueur totale du réseau représente au moins une fraction significative de la longueur d'onde mesurée des ondes acoustiques que l'on mesure.

29. Procédé selon la revendication 16, dans lequel le procédé englobe le fait de déterminer la meilleure ligne pour représenter la pente d'une crête acoustique dans le plan $\kappa$-$\omega$ et pour déterminer la pente de ladite portion de la crête acoustique afin de déterminer la vitesse du son qui se propage à travers le mélange.

**30.** Procédé selon la revendication 16, dans lequel les capteurs de pression (15, 16, 17, 18) englobent des jauges ou des capteurs qui se basent sur la déformation.

*FIG. 1*

*FIG. 2*

**FIG. 3**

**FIG. 13**

80    82  Sensor Array    84    86    14

X1    X2    X3    X4

Turbulent Pipe Flow
Velocity Profile

Coherent Structures

88

88

## FIG. 15

SOS of Pulverized Coal/Air Mixtures — Region of Interest

Target Air/Fuel
Mass Ratio

Good Sensitivity
~1 fps/%mass ratio

Air to Coal Mass Flow Ratio

## FIG. 4

FIG. 5

FIG. 6

## Acoustic Model for Particles in Air

FIG. 7

## Acoustic Model for Particles in Air

FIG. 8

## Sound Speed Calculated from 20-40 Hz - 3/21/02

FIG. 9

FIG. 10

## FIG. 11

## FIG. 12

*FIG. 14*

**FIG. 16**

**FIG. 17**

**FIG. 18**

K-ω plot showing Convective Ridge

FIG. 19

**FIG. 20**

**FIG. 21**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 35123202 P
- US 35978502 P
- US 37584702 P
- US 42543602 P
- US 42672402 P
- US 34409499 A
- US 00774901 A
- US 00773601 A
- US 92559897 A
- US 6016702 A

**Non-patent literature cited in the description**

- **A. P.DOWLING et al.** Sound and Sources of Sound. Halsted Press, 1983